# EUROPEAN PATENT APPLICATION

(11) **EP 4 827 166 A1**
(43) Date of publication of application: **21.10.2026**
(21) Application number: 24925195.0
(22) Date of filing: 19.02.2024
(51) Int. Cl.: H04W 28/10

(54) **COMMUNICATION METHODS AND DEVICES**

(71) Applicant: GUANGDONG OPPO MOBILE TELECOMMUNICATIONS CORP., LTD., Dongguan, Guangdong 523860 (CN)
(72) Inventor: ZHAO, Nande, Dongguan, Guangdong 523860 (CN)
(74) Representative: Wu, Ting
(86) International application number: PCT/CN2024/077625
(87) International publication number: WO 2025/175433

(57) **Abstract**

The present application relates to communication methods, devices, a computer-readable storage medium, a computer program product and a computer program. A communication method comprises: a first terminal sending, in one or more first orthogonal cover code (OCC) groups, a narrowband physical uplink shared channel (NPUSCH) using OCCs.

## Description

### TECHNICAL FIELD

The present disclosure relates to the field of communication, and more particularly, to a communication method, an apparatus, a computer readable storage medium, a computer program product, and a computer program.

### BACKGROUND

In the related art, in the Non-Terrestrial Network (NTN) system, the coverage range of the satellite beam is large, so there may be a large number of terminals that need to access the network side of the NTN within the coverage range of the satellite beam, and in this scenario, the number of terminals that may access the Network side of the NTN at the same time will be higher than the TN. Therefore, how to improve the system capacity becomes a problem that needs to be solved.

### SUMMARY

Embodiments of the present disclosure provide a communication method, an apparatus, a computer-readable storage medium, a computer program product, and a computer program.

An embodiment of the present disclosure provides a communication method. The communication method includes the following operation.

The first terminal sends, in one or more first OCC groups, a Narrow-band Physical Uplink Shared Channel (NPUSCH) to which an Orthogonal Cover Code (OCC) is applied.

An embodiment of the present disclosure provides a communication method. The communication method includes the following operation.

A network device receives, in one or more first OCC groups, a NPUSCH, to which OCC(s) is applied, that is sent by at least one terminal.

An embodiment of the present disclosure provides a first terminal. The first terminal includes the first communication unit.

The first communication unit is configured to send, in one or more first OCC groups, a NPUSCH to which an OCC is applied.

An embodiment of the present disclosure provides a network device. The network device includes the second communication unit.

The second communication unit is configured to receive, in one or more first OCC groups, a NPUSCH, to which OCC(s) is applied, that is sent by at least one terminal.

An embodiment of the present disclosure provides a first terminal. The first terminal includes a transceiver, a processor, and a memory. The memory is configured to store a computer program, the transceiver is configured to communicate with other devices, and the processor is configured to call and run the computer program stored in the memory to cause the first terminal to perform the above method.

An embodiment of the present disclosure provides a network device. The network device includes a transceiver, a processor, and a memory. The memory is configured to store a computer program, the transceiver is configured to communicate with other devices, and the processor is configured to call and run the computer program stored in the memory to cause the network device to perform the above method.

An embodiment of the present disclosure provides a chip for implementing the above method.

Specifically, the chip includes a processor for calling and executing a computer program from a memory to cause a device on which the chip is mounted to perform the above method.

An embodiment of the present disclosure provides a computer-readable storage medium for storing a computer program, and when the computer program is run by a device, the device is caused to execute the above method.

An embodiment of the present disclosure provides a computer program product including computer program instructions that cause a computer to perform the above method.

An embodiment of the present disclosure provides a computer program that, when executed on a computer, causes the computer to perform the above method.

According to the solutions provided by the embodiment of the present disclosure, the terminal can transmit the NPUSCH to which the OCC is applied in one or more OCC groups, so that the transmission of the NPUSCH by using the OCC can realize code division multiplexing on time-frequency resources, thereby improving the system capacity.

### BRIEF DESCRIPTION OF THE DRAWINGS

FIG. 1 is a schematic diagram of an application scenario according to an embodiment of the present disclosure.
FIG. 2 is a schematic flowchart of a communication method according to an embodiment of the present disclosure.
FIG. 3 is a schematic flowchart of a communication method according to another embodiment of the present disclosure.
FIG. 4 is a schematic diagram of a processing scenario in which the NPUSCH collides with a NPRACH resource according to an embodiment of the present disclosure.
FIG. 5 is a schematic diagram of a processing scenario in which the NPUSCH collides with an inserted gap according to an embodiment of the present disclosure.
FIG. 6 is a schematic diagram of a processing scenario in which the NPUSCH collides with a fully reserved uplink subframe according to an embodiment of the present disclosure.
FIG. 7 is a schematic diagram of a processing scenario in which the NPUSCH collides with downlink reception according to an embodiment of the present disclosure.
FIG. 8 is a schematic diagram of a processing scenario in which the NPUSCH transmission collides with SRSs according to an embodiment of the present disclosure.
FIG. 9 is a schematic diagram of a processing scenario in which the NPUSCH transmission collides with reserved symbols according to an embodiment of the present disclosure.
FIG. 10 is a schematic diagram of a scenario in which an NPUSCH to which an OCC is applied is transmitted across slots according to an embodiment of the present disclosure.
FIG. 11 is a schematic diagram of a scenario in which an NPUSCH to which an OCC is applied is transmitted by using multiple subcarriers in slots according to an embodiment of the present disclosure.
FIG. 12 is a schematic diagram of a processing scenario in which DMRSs collide with reserved symbols according to an embodiment of the present disclosure.
FIG. 13 is a schematic diagram of a processing scenario in which a DMRS collides with a fully reserved uplink subframe according to an embodiment of the present disclosure.
FIG. 14 is a schematic diagram of a scenario in which DMRSs are transmitted in multiple OCC groups according to an embodiment of the present disclosure.
FIG. 15 is a schematic diagram of a scenario in which DMRSs are transmitted in an OCC group composed of subcarriers according to an embodiment of the present disclosure.
FIG. 16 is a schematic block diagram of the first terminal according to an embodiment of the present disclosure.
FIG. 17 is a schematic block diagram of a network device according to an embodiment of the present disclosure.
FIG. 18 is a schematic block diagram of a communication device according to an embodiment of the present disclosure.
FIG. 19 is a schematic block diagram of a chip according to an embodiment of the present disclosure.
FIG. 20 is a schematic block diagram of a communication system according to an embodiment of the present disclosure.

### DETAILED DESCRIPTION

The technical solutions in the embodiments of the present disclosure will be described below with reference to the accompanying drawings in the embodiments of the present disclosure.

The technical solutions of the embodiments of the present disclosure may be applied to various communication systems, such as a Long Term Evolution (LTE) system, an Advanced Long Term Evolution (LTE-A) system, a New Radio (NR) system, an evolved system of an NR system, an LTE-based access to unlicensed spectrum (LTE-U) system, an NR-based access to unlicensed spectrum (NR-U) system, an Non-Terrestrial Networks (NTN) System, an Universal Mobile Telecommunication System (UMTS), a Wireless Local Area Networks (WLAN), Wireless Fidelity (WiFi), Fourth-generation communication (5th-Generation, 5G) systems or other communication systems, etc.

Generally speaking, the conventional Communication system supports a limited number of connections and is easy to implement, however, with the development of Communication technology, the mobile Communication system will not only support conventional Communication, but also support, for example, Device to Device (D2D) Communication, Machine to Machine (M2M) Communication, Machine Type Communication (MTC), vehicle-to-vehicle (V2V) Communication, or Vehicle to everything (V2X) Communication, and the like, and embodiments of the present disclosure may be also applied to these communication systems. In one possible implementation, the communication system in the embodiments of the present disclosure may be applied to a Carrier Aggregation (CA) scenario, a Dual Connectivity (DC) scenario, and a Standalone (SA) network layout scenario. In one possible implementation, the communication system in the embodiments of the present disclosure may be applied to an unlicensed spectrum. The unlicensed spectrum may also be considered as a shared spectrum. Alternatively, the communication system in the embodiments of the present disclosure may also be applied to a licensed spectrum. The licensed spectrum may also be considered as a non-shared spectrum.

Embodiments of the present disclosure have described various embodiments in connection with network device and terminal device. The terminal device may also be referred to as a User Equipment (UE), an access terminal, a User unit, a User station, a mobile station, a mobile station, a remote station, a remote terminal, a mobile device, a User terminal, a terminal, a wireless communication device, a User agent, a User device, or the like. The terminal device may be a station (ST) in a WLAN, and may be a cellular telephone, a cordless telephone, a Session Initiation Protocol (SIP) telephone, a Wireless Local Loop (WLL) station, a Personal Digital Assistant (PDA) device, a handheld device with Wireless communication capabilities, a computing device or other processing device connected to a Wireless modem, an in-vehicle device, a wearable device, a terminal device in a next generation communication system such as an NR Network, or a terminal device in a future evolving Public Land Mobile Network (PLMN) Network, or the like. In the embodiments of the present disclosure, the terminal device may be deployed on land, including indoor or outdoor, handheld, wearable, or vehicle-mounted. It may also be deployed on the water surface (e.g. ships, etc.). It may also be deployed in the air (e.g. on aircraft, balloons and satellites, etc.). In the embodiment of the present disclosure, the terminal device may be a Mobile Phone, a tablet computer, a computer with a wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, a wireless terminal device in a smart home, or the like. By way of example and not limitation, in the embodiments of the present disclosure, the terminal device may also be a wearable device. The wearable device may also be called a wearable intelligent device, which is a general term for intelligently designing and developing wearable devices, such as glasses, gloves, watches, clothing and shoes, by applying wearable technology to daily wear. A wearable device is a portable device that is worn directly on the body or integrated into a user's clothing or accessories. Wearable devices are not only hardware devices, but also realize powerful functions through software support, data interaction and cloud interaction. Generalized wearable smart devices have features of full functions, large sizes, complete or partial functions without relying on smart phones, such as smart watches or smart glasses, and only focus on a certain type of application functions, which need to be used in conjunction with other devices such as smart phones, such as various smart bracelets and smart jewelry for physical sign monitoring.

In the embodiment of the present disclosure, the network device may be a device for communicating with a mobile device, and the network device may be an Access Point (AP) in WLAN, a Base Transceiver Station (BTS) in GSM or CDMA, a Base Station (NodeB, NB) in WCDMA, an evolved Base Station (Evolutionary Node B, eNB or eNodeB) in LTE, or a relay Station or an Access Point, or an in-vehicle device, a wearable device, and a network device (gNB) in an NR network, or a network device in a future evolved PLMN network or a network device in an NTN network. By way of example and not limitation, in the embodiments of the present disclosure, the network device may have mobile characteristics, and for example, the network device may be a mobile device. Alternatively, the network device may be a satellite or a balloon station. For example, the satellite may be a low earth Orbit (LEO) satellite, a medium earth Orbit (MEO) satellite, a geostationary earth Orbit (GEO) satellite, a High Elliptical Orbit (HEO) satellite, or the like. Alternatively, the network device may also be a base station provided at a location such as land or water. In the embodiments of the present disclosure, the network device may provide services for the cell, and the terminal communicates with the network device through transmission resources (for example, frequency domain resources, or frequency spectrum resources) used by the cell. The cell may be a cell corresponding to the network device (for example, a base station), and the cell may belong to a macro base station or a base station corresponding to a Small cell. The Small cell here may include: a Metro cell, a Micro cell, a Pico cell, a Femto cell, etc. These Small cells have the characteristics of small coverage and low transmission power, and are suitable for providing high-speed data transmission services.

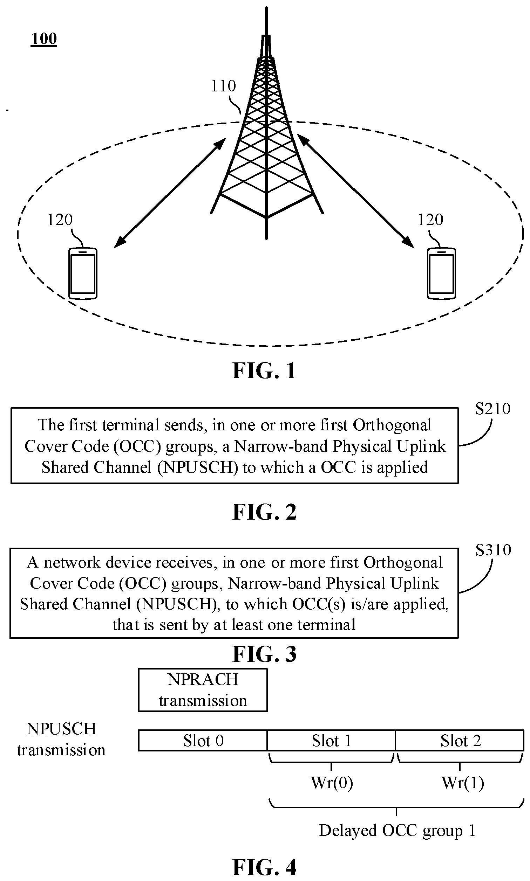

FIG. 1 illustrates exemplarily a communication system 100. The communication system includes a network device 110 and two terminal devices 120. In one possible implementation, the communication system 100 may include multiple network devices 110, and other numbers of terminal devices 120 may be included within the coverage range of each network device 110, which is not limited in the embodiment of the present disclosure. In one possible implementation, the communication system 100 may further include other network entities such as a Mobility Management Entity (MME), an Access and Mobility Management Function (AMF), and the embodiment of the present disclosure is not limited thereto. The network device may further include an access network device and core network elements. That is, the wireless communication system further includes multiple core networks for communicating with access network devices. The access network device may be an Evolutionary Node B (eNB or e-NodeB for short), a macro base station, a micro base station (also referred to as a "small base station"), a pico base station, an access point (AP), a transmission point (TP), or a new generation node B (gNodeB) in a long-term evolution (LTE) system, a next radio (NR) system, or an authorized auxiliary access long-term evolution (LAA-LTE) system. It should be understood that a device having a communication function in the network/system in the embodiments of the present disclosure may be referred to as a communication device. Taking the communication system illustrated in FIG. 1 as an example, the communication device may include a network device and terminal devices having a communication function, and the network device and the terminal device may be specific devices in the embodiments of the present disclosure, which will not be described again here. The communication device may also include other devices in the communication system, such as network controllers, mobile management entities and other network entities, which are not limited in the embodiments of the present disclosure.

In order to facilitate understanding of the embodiments of the present disclosure, the basic procedures and basic concepts involved in the embodiments of the present disclosure will be briefly described below. It is to be understood that the basic procedures and basic concepts described below do not limit the embodiments of the present disclosure.

Demodulation Reference Signal (DMRS) of Narrow Band Internet of Things (NB IoT):

For single carrier uplink transmission, that is, ${N}_{sc}^{RU} = 1$, the reference signal sequence used is: ${\overline{r}}_{u} \left(n\right) = \frac{1}{\sqrt{2}} \left(1+j\right) \left(1-2c\left(n\right)\right) w \left(n mod 1 6\right) , 0 \leq n < {M}_{rep}^{NPUSCH} {N}_{slots}^{UL} {N}_{RU}$

Here, ${M}_{rep}^{NPUSCH}$ is the number of repetitions of NPUSCH, ${N}_{slots}^{UL}$ is the number of slots occupied by one Resource Unit (RU), and *N_{RU}* is the number of RUs occupied by NPUSCH. c(n) is a binary pseudo-random sequence, w(n) is the corresponding value that is selected from the candidate value set according to the base sequence index, and for NPUSCH format 1, if the sequence group frequency hopping is not used, u = N_{I}^{N}_{D}^{cell} mod 1 6, otherwise u is determined according to the sequence group frequency hopping process.

In this case, the DMRS reference signal sequence of NPUSCH format 1 is: *rᵤ*(*n*) = *r̅ᵤ*(*n*)*.*

For multi-carrier uplink transmission, that is, ${N}_{sc}^{RU} > 1$, the reference signal sequence used is a cyclic shift α of the base sequence: ${r}_{u} \left(n\right) = {e}^{jαn} {e}^{j \frac{ϕ \left(n\right) π}{4}} , 0 \leq n < {N}_{sc}^{RU}$

Herein, ϕ(n) is the corresponding value that is selected from the candidate value set according to the base sequence index u and if the sequence group frequency hopping is not used, u is provided by the higher layer parameter, or $u = \left\{\begin{matrix}{N}_{ID}^{Ncell} mod 1 2 & {for N}_{sc}^{RU} = 3 \\ {N}_{ID}^{Ncell} mod 1 4 & {for N}_{sc}^{RU} = 6 \\ {N}_{ID}^{Ncell} mod 3 0 & {for N}_{sc}^{RU} = 12\end{matrix}\right.$, if the sequence group frequency hopping is used, u is determined according to the sequence group frequency hopping process. The cyclic shift α is derived from the parameters provided by the upper layer.

The reference signal sequence r(·) is mapped to the RE (*k, l*) starting r(0), in the order of the frequency domain *k,* the time domain *l,* and finally in the slot. The symbol index values *l* of the DMRS in the slots are provided by Table 1.

**Table 1 DMRS position l of NPUSCH**

| NPUSCH format | Value *l* | |
|---|---|---|
| | Δf = 3.75 kHz | Δf = 15 kHz |
| 1 | 4 | 3 |
| 2 | 0,1,2 | 2,3,4 |

In the related art, for NPUSCH transmission using early data transmission (EDT), if the TBS selected by the terminal device is allowed to be smaller than the TBS for Msg3 configured by the higher layer parameter, the number of repetitions of the NPUSCH transmission is equal to or greater than the minimum value of $\frac{{TBS}_{Msg 3}}{{TBS}_{Msg 3 , max}} ⋅ {N}_{Rep}$. Here, *TBS*_{Msg3} is the TBS corresponding to the NPUSCH transmission, *TBS*_{Msg3,max} is the maximum TBS for Msg3 configured by the higher layer parameter when the terminal device performs EDT, and *N*_{Rep} is the number of repetitions of the NPUSCH configured by the network device.

It is to be understood that the terms "system" and "network" are often used interchangeably herein. The term "and/or" herein is merely used for describing an association relationship between associated objects, and represents that there may be three relationships, for example, A and/or B, which may represent that A exists alone, A and B exists simultaneously, and B exists alone. In addition, the character "/" herein generally indicates that the associated objects are in an "or" relationship. It should be understood that the "indication" mentioned in the embodiments of the present disclosure may be a direct indication, an indirect indication, or an indication that there is an association relationship. For example, A indicates B, which may mean that A directly indicates B, for example, B may be acquired by A; It may also be indicated that A indirectly indicates B, for example, A indicates C, and B may be acquired by C; It can also be indicated that there is an association relationship between A and B. In the description of the embodiment of the present disclosure, the term "correspondence" may mean that there is a direct correspondence or an indirect correspondence between the two objects, or may mean that there is a correlation between the two objects, or may be a relationship between instruction and being instructed, configuration and being configured, or the like.

FIG. 2 is a schematic flowchart of a communication method according to an embodiment of the present disclosure. The method includes at least a part of the following.

In operation S210, the first terminal sends, in one or more first OCC groups, a NPUSCH to which an OCC is applied.

FIG. 3 is a schematic flowchart of a communication method according to another embodiment of the present disclosure. The method includes at least a part of the following.

In operation S310, a network device receives, in one or more first OCC groups, a NPUSCH, to which OCC(s) is/are applied, that is sent by at least one terminal.

The network device may manage multiple terminals, and the transmission resources occupied by the NPUSCHs corresponding to the multiple terminals are the same, that is, multiple terminals are managed by the network device and multiplex the same NPUSCH transmission resources.

The at least one terminal may be one or more terminals among multiple terminals managed by the network device and multiplexing the same NPUSCH transmission resources. In the present disclosure, for simplicity, at least one terminal managed by the network device and multiplexing the same NPUSCH transmission resource is simply referred to as "at least one terminal", and the description thereof will not be repeated hereinafter.

In the embodiment of the present disclosure, the first terminal may be any one of at least one terminal. It should be noted that the description relating to the first terminal or the description relating to the processing of the first terminal hereinafter is executed by each of the at least one terminal, and each terminal will not be described in detail for simplicity.

First, related processing of the first terminal will be described.

In some possible implementations, on the first terminal side, the one or more first OCC groups are determined based on one or more second OCC groups. The one or more second OCC groups are determined based on transmission resources occupied by the NPUSCH and/or a length of an orthogonal sequence.

The transmission resources may include time domain resources and/or frequency domain resources. Accordingly, the transmission resources occupied by the NPUSCH may include at least one of following: time domain resources occupied by the NPUSCH or frequency domain resources occupied by the NPUSCH. The transmission resources occupied by the NPUSCH may be continuous or discontinuous in the time domain and/or the frequency domain. That is, the time domain resources occupied by the NPUSCH may be continuous or discontinuous, and/or the frequency domain resources occupied by the NPUSCH may be continuous or discontinuous.

Each of the one or more second OCC groups includes one or more OCC blocks, and different OCC blocks of the one or more second OCC blocks correspond to different time domain ranges and/or different frequency domain ranges. Since the transmission resources occupied by the NPUSCH may be continuous or discontinuous in the time domain and/or frequency domain, adjacent OCC blocks within each second OCC group may be continuous or discontinuous in the time domain and/or frequency domain, and each OCC block may be continuous or discontinuous in the time domain and/or frequency domain.

The transmission resources occupied by the NPUSCH may be configured by the network device for the first terminal, and the manner and timing of the network device configuring the transmission resources occupied by the NPUSCH for the first terminal are not limited in the embodiments.

In one embodiment, the transmission resources occupied by the NPUSCH are related to the number of repetitions of the NPUSCH. The number of repetitions of the NPUSCH is determined based on at least one of following: the number of repetitions of the NPUSCH configured by the network device, the maximum Transport Block Size (TBS) configured by a high layer when the first terminal performs EDT, a TBS corresponding to the NPUSCH transmission, or a length of an orthogonal sequence.

In this embodiment, the calculation manner of the number or length of the transmission resources occupied by the NPUSCH is not limited in the embodiments of the present disclosure. For example, in some possible examples, the number or length of transmission resources occupied by the NPUSCH may be equal to a product of the number of repetitions of the NPUSCH, the number of Resource units (RUs) occupied by the NPUSCH, and the number of slots occupied by one RU. For example, the number or length of transmission resources occupied by the NPUSCH may be represented by the following formula: ${M}_{rep}^{NPUSCH} {N}_{slots}^{UL} {N}_{RU}$. Here, ${M}_{rep}^{NPUSCH}$ is the number of repetitions of the NPUSCH, ${N}_{slots}^{UL}$ is the number of slots occupied by one RU, and *N*_{RU} is the number of RUs occupied by the NPUSCH.

The maximum TBS configured by a high layer when the first terminal performs EDT may be, specifically, the maximum TBS for the Msg 3 (information 3) configured by a high layer when the first terminal performs EDT.

In the present embodiment, if the TBS selected by the first terminal is allowed to be less than the TBS for Msg3 configured by the higher layer parameter for the NPUSCH transmission using EDT, the number ( ${M}_{rep}^{NPUSCH}$) of repetitions of the NPUSCH transmission is the minimum value (or minimum integer value) that is equal to or greater than $\frac{{TBS}_{Msg 3}}{{TBS}_{Msg 3 , max}} ⋅ {N}_{Rep}$, and is an integer multiple of the length *N*_{SF} of the orthogonal sequence. Here, *TBS*_{Msg3} is the TBS corresponding to the NPUSCH transmission, *TBS*_{Msg3, max} is the maximum TBS for Msg3 configured by the higher layer parameter when the first terminal performs EDT, and *N*_{Rep} is the number of repetitions of the NPUSCH configured by the network device.

For example, the network device configures *TBS*_{Msg3} = 224 bits, *TBS*_{Msg3,max} = 600bits, *N*_{Rep} = 32, and *N*_{SF} = 4. If the TBS selected by the first terminal is allowed to be less than the TBS for Msg3 configured by the higher layer parameter, for the NPUSCH to which the OCC is not applied, the number ( ${M}_{rep}^{NPUSCH}$) of repetitions of the NPUSCH transmission is determined to be greater than a minimum value (or minimum integer value) of $\frac{{TBS}_{Msg 3}}{{TBS}_{Msg 3 , max}} ⋅ {N}_{Rep}$, that is, 10. For the NPUSCH to which OCC is applied, the number ( ${M}_{rep}^{NPUSCH}$) of repetitions of the NPUSCH transmission is determined to be a minimum value (or minimum integer value) that is equal to $\frac{{TBS}_{Msg 3}}{{TBS}_{Msg 3 , max}} ⋅ {N}_{Rep}$ and is an integer multiple of *N*_{SF}, that is, 12.

In one embodiment, on the first terminal side, the one or more second OCC groups are determined based on the time domain resources occupied by the NPUSCH and/or the length of the orthogonal sequence.

The time domain resources occupied by the NPUSCH may adopt time units as time domain units. That is, the time domain resources occupied by the NPUSCH may include one or more time units occupied by the NPUSCH.

Here, the time unit may be determined according to the actual situation. Exemplarily, the time units may include one of the following: slots, symbols, minutes, seconds, frames, milliseconds, etc., with various possible time units not exhaustively listed herein. In a preferred example, the time unit may be a slot.

In one example, the one or more second OCC groups are obtained by dividing based on the time domain resources occupied by the NPUSCH and the length of the orthogonal sequence.

Specifically, each of the one or more second OCC groups may include one or more OCC blocks, the number of OCC blocks included in each second OCC group is equal to the length of the orthogonal sequence, each OCC block in each second OCC group includes at least a part of the one or more time units occupied by the NPUSCH, and different OCC blocks include different time units occupied by the NPUSCH.

The number of time units included in each OCC block may be pre-configured, default, or agreed by a protocol. For example, the number of time units included in each OCC block may be one or more, and for example, the number of time units included in each OCC block may be one slot, two slots, or more or less, which is not limited or exhaustive here.

Exemplarily, taking a time unit as a slot as an example, the method of dividing multiple second OCC groups by the first terminal may include: dividing multiple slots occupied by the NPUSCH into multiple OCC blocks, or dividing multiple OCC blocks into multiple second OCC groups based on the length of the orthogonal sequence.

In yet another example, the one or more second OCC groups are obtained by dividing based on time domain resources occupied by the NPUSCH.

Alternatively, the number of time units included in each of the one or more second OCC groups may be preconfigured, or default, or agreed by a protocol, or predefined.

Alternatively, the number of time units included in each of the one or more second OCC groups may be determined according to time domain resources occupied by the NPUSCH.

For example, the number of time units included in each of the one or more second OCC groups is the number of time domain resources occupied by the NPUSCH divided by a specified value. The specified value may be a positive integer, for example, the specified value may be 1, or 2, or greater, and the specified value may be preconfigured, or default, or agreed by a protocol, or predefined. In some possible examples, the specified value may also be referred to as the number of OCC groups, or the number of second OCC groups, or the total number of second OCC groups, or the like.

For example, if the specified value is 2, the number of time units included in each second OCC group is equal to the time domain resources occupied by the NPUSCH divided by 2, that is, the time domain resources occupied by the NPUSCH may be divided into two second OCC groups. For another example, the specified value is 1, and the second OCC group includes all time domain resources occupied by the NPUSCH, that is, all time domain resources occupied by the NPUSCH is taken as one second OCC group.

In a preferred example, the number of time units included in each second OCC group is greater than the length of the orthogonal sequence.

In addition, the numbers of time units included in different second OCC groups may be the same or different, and the present embodiment is not limited thereto. In some preferred examples, the numbers of time units included in different second OCC groups are the same.

Further, each second OCC group may be divided into one or more OCC blocks. Here, the number of time units included in each OCC block in the second OCC group may be determined based on the time domain resources occupied by the second OCC group and the length of the orthogonal sequence.

Exemplarily, taking time units as a slot as an example, a manner in which the first terminal determines each second OCC group and the number of time units included in each OCC block in each second OCC group may include: dividing multiple slots occupied by the NPUSCH into one or more second OCC groups; and dividing each second OCC group into one or more OCC blocks based on the length of the orthogonal sequence.

In one embodiment, the one or more second OCC groups are obtained by dividing based on the frequency domain resources occupied by the NPUSCH and/or the length of the orthogonal sequence.

The frequency domain resources occupied by the NPUSCH may adopt subcarriers as frequency domain units. That is, the frequency domain resources occupied by the NPUSCH may include one or more subcarriers occupied by the NPUSCH.

In one example, the one or more second OCC groups are obtained by dividing based on the frequency domain resources occupied by the NPUSCH and the length of the orthogonal sequence.

Specifically, each of the one or more second OCC groups may include one or more OCC blocks, the number of OCC blocks included in each second OCC group is equal to the length of the orthogonal sequence, each OCC block of each second OCC group includes at least a part of the one or more subcarriers occupied by the NPUSCH, and different OCC blocks include different subcarriers occupied by the NPUSCH.

The number of subcarriers included in each OCC block may be pre-configured, or default, or agreed by a protocol. For example, the number of subcarriers included in each OCC block may be one or more.

Exemplarily, the manner in which the first terminal divides the one or more second OCC groups may include: dividing one or more subcarriers occupied by the NPUSCH into one or more OCC blocks; or dividing the one or more OCC blocks into one or more second OCC groups based on the length of the orthogonal sequence.

In yet another example, the one or more second OCC groups are obtained by dividing based on frequency domain resources occupied by the NPUSCH.

Alternatively, the number of subcarriers included in each of the one or more second OCC groups may be preconfigured, or default, or agreed by a protocol, or predefined.

Alternatively, the number of subcarriers included in each of the one or more second OCC groups may be determined based on frequency domain resources occupied by the NPUSCH. Exemplarily, the number of subcarriers included in each of the one or more second OCC groups is the number of subcarriers occupied by the NPUSCH divided by a specified value. The description of the specified value is the same as that of the previous embodiment, and will not be described in detail.

In a preferred example, the number of subcarriers included in each second OCC group is greater than the length of the orthogonal sequence.

In addition, the numbers of subcarriers included in different second OCC groups may be the same or different, and the present embodiment is not limited thereto, but in some preferred examples, the numbers of subcarriers included in different second OCC groups are the same.

Further, each second OCC group may be divided into one or more OCC blocks. The number of subcarriers included in each OCC block in the second OCC group may be determined based on the frequency domain resources occupied by the second OCC group and the length of the orthogonal sequence.

Exemplarily, a manner in which the first terminal determines each second OCC group and the number of subcarriers included in each OCC block in each second OCC group may include: dividing multiple subcarriers occupied by the NPUSCH into one or more second OCC groups; and dividing each second OCC group into one or more OCC blocks based on the length of the orthogonal sequence.

It should be noted that the above two embodiments describe how to divide the second OCC group from two perspectives of time domain and frequency domain, respectively, and in actual processing, the above two embodiments may also be combined to divide the second OCC group, for example: dividing multiple subcarriers and multiple slots occupied by the NPUSCH into multiple OCC blocks; and dividing multiple OCC blocks into multiple second OCC groups based on the length of the orthogonal sequence.

It should also be noted that one or more second OCC groups divided by each terminal should also be the same.

Further, in the multiple second OCC groups, there may be a case where the NPUSCH collides with other resources in a part of the second OCC groups, and therefore, the second OCC groups may be further adjusted in combination with whether the NPUSCH collides with other resources to obtain one or more first OCC groups.

Here, each of the one or more first OCC groups includes multiple OCC blocks, and different OCC blocks of the multiple OCC blocks correspond to different time domain ranges and/or different frequency domain ranges. The first OCC group(s) is OCC group(s) for transmitting an NPUSCH to which the OCC is applied. That is, on the first terminal side, the first OCC group(s) is OCC group(s) for transmitting the NPUSCH to which the OCC is applied. Since the adjacent OCC blocks within the respective second OCC groups may be continuous or discontinuous in the time domain and/or frequency domain, the adjacent OCC blocks in the finally determined one or more first OCC groups may be continuous or discontinuous in the time domain and/or frequency domain.

In some possible embodiments, on the first terminal side, the method may further include the following operation. In a case that the first resource satisfying the first condition exists in the third OCC group of the one or more second OCC groups, the first terminal performs one of following: canceling NPUSCH transmission in the third OCC group, postponing the NPUSCH transmission corresponding to the third OCC group, or adjusting the third OCC group.

The first condition includes that the NPUSCH collides with at least one of following: a Narrow-band Physical Random Access Channel (NPRACH) resource, an inserted gap, a reserved uplink subframe, a downlink reception, a reserved symbol, or a Sounding Reference Signal (SRS).

The NPRACH resource may refer to a transmission resource occupied by the NPRACH, and the NPRACH may be configured or scheduled by the network device for the first terminal, and the method of configuring or scheduling the NPRACH resource by the network device is not limited in this embodiment. Alternatively, the NPRACH resource may also be referred to as an NPRACH transmission, or an NPRACH transmission resource, or a transmission resource occupied by the NPRACH, or a resource occupied by NPRACH transmission, or the like, which is not exhaustive here.

The inserted gap may refer to a gap inserted during transmission (or uplink transmission), the inserted gap may include inserted time units, the position and number (or length) of the inserted time units may be configured or scheduled by the network device for the first terminal, or the position of the inserted time units may be predefined (for example, predefined on both the first terminal and the network device side).

Exemplarily, the inserted gap may be used for time-frequency synchronization. For example, after each time of uplink transmission of 256 · 30720*Tₛ* time units, the first terminal needs to insert 40 · 30720*Tₛ* time units to maintain time-frequency synchronization, and the inserted 40 · 30720*Tₛ* time units are inserted gaps.

The reserved uplink subframe may be a fully reserved uplink subframe, and the content to be carried by the reserved uplink subframe is not limited in this embodiment. The position of the reserved uplink subframe may be configured or scheduled by the network device for the first terminal.

The downlink reception may refer to receiving content or information carried by a downlink channel, or receiving downlink information, or the like. The position of the transmission resource occupied by the downlink reception may be configured or scheduled by the network device for the first terminal. The downlink channel corresponding to the downlink reception or the specific transmitted content is not limited in this embodiment. Here, the transmission resource is the same as the definition of the previous embodiment, and may include a time domain resource and/or a frequency domain resource.

The content transmitted and/or received by the reserved symbol is not limited in this embodiment, and the position of the reserved symbol may be configured or scheduled by the network device for the first terminal.

The position of the transmission resource occupied by the SRS may be configured or scheduled by the network device.

Exemplarily, the specific processing manner of the first terminal determining that the first resource satisfying the first condition exists in the third OCC group of the one or more second OCC groups may include the following. The first terminal determines whether the resource(s) in the one or more second OCC groups at least partially overlaps with the resource included in the first condition. If so, it is determined that the NPUSCH collides with the resource included in the first condition, a resource at a position where the NPUSCH collides with the resource included in the first condition is taken as the first resource, the second OCC group in which the first resource is located is taken as the third OCC group, and it is determined that the first resource satisfying the first condition exists in the third OCC group of the one or more second OCC groups. The resource included in the first condition includes at least one of the following: a NPRACH resource, an inserted gap, a reserved uplink subframe, downlink reception, a reserved symbol, or a SRS. The resource at a position where the NPUSCH collides with the resource included in the first condition refers to a time domain resource and/or a frequency domain resource, that at least partially overlaps the resource included in the first condition, in one or more second OCC groups.

Taking the first condition including that the NPUSCH collides with the NPRACH resource as an example, the specific processing manner for the first terminal determining that the first resource satisfying the first condition exists in the third OCC group of the one or more second OCC groups may include the following. The first terminal determines whether the resource(s) in the one or more second OCC groups at least partially overlaps with the NPRACH resource. If so, it is determined that the NPUSCH collides with the NPRACH resource, the resource at the position where the NPUSCH collides with the NPRACH resource is taken as the first resource, the second OCC group in which the first resource is located is taken as the third OCC group, and it is determined that the first resource satisfying the first condition exists in the third OCC group of the one or more second OCC groups. The resource at the position where the NPUSCH collides with the NPRACH resource refers to a time-frequency resource that at least partially overlaps the NPRACH resource, in one or more second OCC groups.

Exemplarily, the first condition described above may be used in combination or alone.

For example, the first condition may include only that the NPUSCH collides with the NPRACH resource. That is, the process of cancelling, postponing, or adjusting is subsequently performed only for the third OCC group in which the NPUSCH collides with the NPRACH resource.

For another example, the first condition may include that the NPUSCH collides with the NPRACH resource, and the NPUSCH collides with the inserted gap. That is, the process of cancelling, postponing, or adjusting is subsequently performed for the third OCC group in which the NPUSCH collides with the NPRACH resource, and the process of cancelling, postponing, or adjusting is performed similarly for the third OCC group in which the NPUSCH collides with the inserted gap.

For another example, the first condition may include all of the above. That is, the process of cancelling, postponing, or adjusting is subsequently performed for each third OCC group in which the NPUSCH collides with any one or more of the above resources. More specifically, in this case, any one third OCC group may collide with any one or more of the above NPRACH resource, inserted gap, reserved uplink subframe, downlink reception, reserved symbol, and SRS. In addition, different third OCC groups may collide in the same or different cases, and for example, based on the first condition including all of the above, four third OCC groups (the third OCC group 1, the third OCC group 2, the third OCC group 3, and the third OCC group 4, respectively) are finally obtained, the third OCC group 1 may collide with the NPRACH resource, the third OCC group 2 may collide with the reserved uplink subframe, the third OCC group 3 may collide with the inserted gap, and the third OCC group 4 also collides with the reserved uplink subframe.

In one embodiment, the first terminal may cancel the NPUSCH transmission in the third OCC group after determining that the first resource satisfying the first condition exists in the third OCC group.

The canceling NPUSCH transmission in the third OCC group may include the following. The first terminal does not take the third OCC group as one of the one or more first OCC groups and cancels the NPUSCH transmission corresponding to the third OCC group.

Exemplarily, after the second OCC group(s) is/are obtained by dividing by the first terminal, the following processes are performed. An NPUSCH corresponding to each second OCC group is determined. Whether a resource satisfying the first condition exists in each second OCC group is determined. In a case that the first resource satisfying the first condition exists in the third OCC group of one or more second OCC groups, the first terminal does not take the third OCC group as one of the one or more first OCC groups and cancels sending the NPUSCH corresponding to the third OCC group.

Here, the NPUSCH corresponding to each second OCC group may refer to all symbols of the transmitted NPUSCH in each second OCC group.

The first terminal not taking the third OCC group as one of the one or more first OCC groups may also be understood to mean that the first terminal cancels the third OCC group and does not take the third OCC group as one of the one or more first OCC groups.

In one embodiment, after determining that a first resource satisfying the first condition exists in the third OCC group, the first terminal may postpone the NPUSCH transmission corresponding to the third OCC group.

The postponing the NPUSCH transmission corresponding to the third OCC group may include: in a case that the first terminal does not take the third OCC group as one of the one or more first OCC groups, and after the third OCC group, there remain one or more second OCC groups for which no resources satisfying the first condition exist, taking the first second OCC group in which the resource satisfying the first condition does not exist after the third OCC group as the seventh OCC group, taking the seventh OCC group as one of the one or more first OCC groups, and postponing the NPUSCH transmission corresponding to the third OCC group to the seventh OCC group.

After the third OCC group may mean after a time domain end position of the third OCC group and/or after a frequency domain end position of the third OCC group.

It should also be noted that in the case that the seventh OCC group is one of the one or more first OCC groups and the NPUSCH corresponding to the third OCC group is postponed to be sent in the seventh OCC group, the following processes are performed by the first terminal. From the one or more second OCC groups, the first eighth OCC group in which the resource satisfying the first condition does not exist after the seventh OCC group is determined, the eighth OCC group is taken as one of the one or more first OCC groups, and the NPUSCH originally corresponding to the seventh OCC group is postponed to be sent in the eighth OCC group; and so on, until the processing for each second OCC group is completed, and each first OCC group and the NPUSCH corresponding to each first OCC group are obtained.

In addition, the following processes may be further included. After determining that the first resource satisfying the first condition exists in the third OCC group, in a case that the third OCC group is the last OCC group of one or more second OCC groups or there is no remaining second OCC group in which a resource satisfying the first condition does not exist after the third OCC group, the first terminal directly cancels the third OCC group and cancels NPUSCH transmission corresponding to the third OCC group.

Alternatively, the following processes may be further included. After determining that the first resource satisfying the first condition exists in the third OCC group, in a case that the third OCC group is the last OCC group of one or more second OCC groups or there is no remaining second OCC group in which a resource satisfying the first condition does not exist after the third OCC group, the first terminal re-divides an OCC group in which the resource satisfying the first condition does not exist after the third OCC group, and the re-divided OCC group is used for sending an NPUSCH corresponding to the third OCC group. Here, the re-divided OCC group being used for sending the NPUSCH corresponding to the third OCC group may mean that the re-divided OCC group is taken as one of one or more first OCC groups to send the NPUSCH corresponding to the third OCC group on the re-divided OCC group.

In one embodiment, the first terminal may adjust the third OCC group after determining that the first resource satisfying the first condition exists in the third OCC group.

Adjusting the third OCC group may include the following operations. The first terminal postpones the third OCC group to the second resource position, and takes the postponed third OCC group as one of the one or more first OCC groups. The second resource is after the first resource and the second resource does not satisfy the first condition.

The second resource is after the first resource and the second resource does not satisfy the first condition, which may mean that the second resource is after the first resource and the second resource is the first resource that does not satisfy the first condition.

The second resource does not satisfy the first condition, which may mean that the NPUSCH does not collide with any of the following on the second resource: an NPRACH resource, an inserted gap, a reserved uplink subframe, a downlink reception, a reserved symbol, or an SRS.

The time domain unit of the first resource and the second resource may both be time unit, and/or the frequency domain unit of the first resource and the second resource may both be subcarrier. For example, when the second resource is determined in the time domain and the time unit is a slot, the second resource may be the first slot that does not satisfy the first condition after the end slot of the first resource.

Alternatively, the operations that the first terminal postpones the third OCC group to the second resource position, and takes the postponed third OCC group as one of the one or more first OCC groups may include the following operations. In a case that the third OCC group is the last OCC group of the one or more second OCC groups and the second resource that does not satisfy the first condition exists after the first resource, the first terminal postpones the starting position of the third OCC group to the second resource position and does not postpone the end position of the third OCC group, and the postponed third OCC group is taken as one of the one or more first OCC groups.

Here, the first terminal does not postpone the end position of the third OCC group, which may mean that the first terminal keeps the end position of the transmission resources occupied by the NPUSCH unchanged. In this case, the number of OCC blocks contained in the third OCC group may be less than the length of the orthogonal sequence.

Alternatively, the operations that the first terminal postpones the third OCC group to the second resource position, and takes the postponed third OCC group as one of the one or more first OCC groups may include the following operations. In a case that the third OCC group is the last OCC group of the one or more second OCC groups and the second resource that does not satisfy the first condition exists after the first resource, the first terminal postpones the starting position of the third OCC group to the second resource position, determines the end position of the postponed third OCC group based on the starting position of the postponed third OCC group and the length of the orthogonal sequence, to obtain the postponed third OCC group and takes the postponed third OCC group as one of the one or more first OCC groups. In this case, the number of OCC blocks contained in the third OCC group is still equal to the length of the orthogonal sequence, but the end position of the transmission resources occupied by the NPUSCH may change.

In the above examples, since the third OCC group in which the resource collision occurs is not cancelled, but the third OCC group is postponed to a position where the resource collision does not occur, the NPUSCH sent by the postponed third OCC group remains unchanged.

Alternatively, the operations that the first terminal postpones the third OCC group to the second resource position, and takes the postponed third OCC group as one of the one or more first OCC groups may include the following operations. In a case that the third OCC group is not the last OCC group of the one or more second OCC groups and the second resource that does not satisfy the first condition exists after the first resource, the first terminal postpones the starting position of the third OCC group to the second resource position, determines the end position of the postponed third OCC group based on the starting position of the postponed third OCC group and the length of the orthogonal sequence, to obtain the postponed third OCC group, and takes the postponed third OCC group as one of the one or more first OCC groups.

Further, after taking the postponed third OCC group as one of the one or more first OCC groups, the process of the first terminal may further include the following operation. In a case that the postponed third OCC group at least partially overlaps (or at least partially coincides) with the ninth OCC group, that does not satisfy the first condition, of the one or more second OCC groups, the first terminal postpones a starting position and/or an end position of the ninth OCC group based on the postponed third OCC group, and takes the ninth OCC group as one of the one or more first OCC groups.

In addition, since the one or more second OCC groups are not necessarily continuous in the time domain and/or frequency domain. Based on this, it is also possible that the postponed third OCC group does not overlap (coincide) with any second OCC group that does not satisfy the first condition, and in this case, the above-described processing may not be performed.

The postponed third OCC group at least partially overlapping with the ninth OCC group that does not satisfy the first condition of the one or more second OCC groups may mean that at least a part of the resources of the postponed third OCC group are located in the ninth OCC group that does not satisfy the first condition of the one or more second OCC groups, or that the end position of the postponed third OCC group is located in the ninth OCC group that does not satisfy the first condition of the one or more second OCC groups.

The operation that the first terminal postpones the starting position and/or the end position of the ninth OCC group based on the postponed third OCC group may include the following operation. The first terminal postpones the starting position and the end position of the ninth OCC group based on the end position of the postponed third OCC group. The adjusted starting position of the ninth OCC group is located after the end position of the postponed third OCC group, and the adjusted ninth OCC group does not contain a resource satisfying the first condition.

Further, after the ninth OCC group is adjusted, the second OCC group that partially overlaps with the postponed ninth OCC group and does not satisfy the first condition may be adjusted by performing processing similar to that of the postponed third OCC group in combination with the postponed ninth OCC group, and so on, and the process is not repeatedly described.

In this example, the NPUSCH sent by the postponed third OCC group remains unchanged. Similarly, except for the postponed third OCC group, other OCC groups, even though their resource positions are also postponed, still keep the originally intended NPUSCH unchanged, which will not be repeatedly described.

Alternatively, the method may further include the following operation. After the first terminal determines that the first resource satisfying the first condition exists in the third OCC group, in a case that the third OCC group is the last OCC group of one or more second OCC groups and the second resource not satisfying the first condition does not exist after the first resource, the first terminal cancels the third OCC group and cancels the NPUSCH transmission corresponding to the third OCC group.

Alternatively, the method may further include the following operation. After the first terminal determines that the first resource satisfying the first condition exists in the third OCC group, in a case that the third OCC group is the last OCC group of the one or more second OCC groups and the second resource not satisfying the first condition does not exist after the first resource (or after the first resource in the third OCC group), an OCC group in which the resource satisfying the first condition does not exist is re-divided after the third OCC group, and the re-divided OCC group is used for sending the NPUSCH corresponding to the third OCC group.

Alternatively, the method further includes the following operation. After the first terminal determines that the first resource satisfying the first condition exists in the third OCC group, in a case that the third OCC group is the last OCC group of the one or more second OCC groups and the second resource not satisfying the first condition exists after the first resource in the third OCC group, the first terminal postpones a starting position of the third OCC group to the second resource position, determines an end position of the postponed third OCC group according to the starting position of the postponed third OCC group, to obtain the postponed third OCC group, and uses the postponed third OCC group as one of the one or more first OCC groups.

It should be noted that the processing that may be performed by the first terminal in a case that the first resource satisfying the first condition exists in the third OCC group of the one or more second OCC groups has been described by various embodiments above, and in actual processing, the processing that may be performed by the first terminal may be the same or different in combination with different first conditions.

In one example, the first condition includes at least one of the following: the NPUSCH collides with an NPRACH resource, the NPUSCH collides with an inserted gap, the NPUSCH collides with a fully reserved uplink subframe, or the NPUSCH collides with a downlink reception. After the first terminal determines that the first resource satisfying the first condition exists in the third OCC group, the first terminal may perform a process of adjusting the third OCC group.

With reference to FIG. 4, the first condition includes that the NPUSCH collides with the NPRACH resource (or NPRACH transmission as illustrated in FIG. 4). In a case that the NPUSCH (or the NPUSCH transmission or the transmission resource occupied by the NPUSCH) collides with the NPRACH transmission in the slot 0, and the slot 0 is the first resource included in the original OCC group 1 (the OCC group 1 is the third OCC group in the foregoing embodiment, and the original OCC group 1 includes the slot 0 and the slot 1), the first terminal postpones the transmission of the collided NPUSCH to the slot 1, and the OCC group 1 is determined based on the slot that does not collide with the NPRACH resource. Specifically, the original OCC group 1 includes a slot 0 and a slot 1. If the NPUSCH (or the NPUSCH transmission or the transmission resource occupied by the NPUSCH) collides with the NPRACH resource (or the NPRACH transmission as illustrated in FIG. 4) in the slot 0, the starting time domain position of the OCC group 1 is postponed from the slot 0 to the slot 1, and the end position of the postponed OCC group 1, i.e., the slot 2, is determined based on the slot 1 and the length of orthogonal sequence (for example, 2), to obtain the postponed OCC group 1, that is, the slot 1 and the slot 2 constitute the postponed OCC group 1.

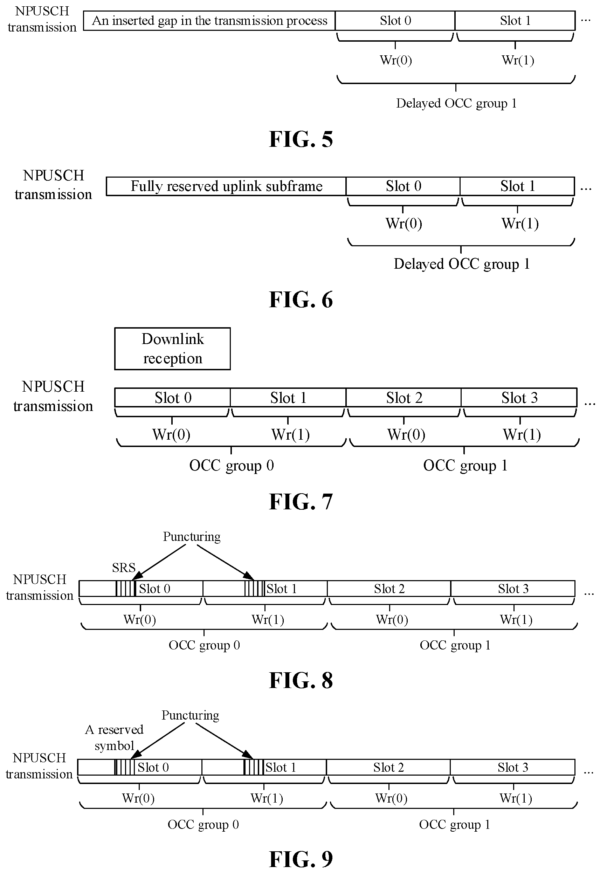

With reference to FIG. 5, the first condition includes that the NPUSCH collides with the inserted gap. After each time of uplink transmission of 256 · 30720*Tₛ* time units, the first terminal needs to insert 40 · 30720*Tₛ* time units to maintain time-frequency synchronization. Then, if the NPUSCH (or the NPUSCH transmission or the transmission resource occupied by the NPUSCH) collides with the slot inserted during transmission in the original OCC group 1, the collided NPUSCH is postponed to be sent in the first slot 0 (i.e., the second resource) that does not satisfy the first condition after the inserted gap, and the OCC group 1 is determined (or adjusts) based on the slot that does not collide with the inserted gap. Specifically, the manner for adjusting the OCC group 1 may be determining the end position of the postponed OCC group 1, i.e., the slot 1, based on the slot 0 and the length of the orthogonal sequence (for example, 2), and forming the postponed OCC group 1 by combining the slot 0 and the slot 1.

With reference to FIG. 6, the first condition includes that the NPUSCH collides with a fully reserved uplink subframe. In a case that the NPUSCH (or the NPUSCH transmission or the transmission resource occupied by the NPUSCH) collides with the fully reserved uplink subframe, the first terminal postpones the transmission of the collided NPUSCH to the first slot 0 (that is, the second resource) that does not satisfy the first condition after the fully reserved uplink subframe, and the OCC group 1 is determined or adjusted based on the slot that does not collide with the inserted gap. Specifically, the manner for adjusting the OCC group 1 may be determining the end position of the postponed OCC group 1, i.e., the slot 1, based on the slot 0 and the length of the orthogonal sequence (for example, 2), and forming the postponed OCC group 1 by combining the slot 0 and the slot 1.

In one example, the first condition includes at least one of the following: the NPUSCH collides with an NPRACH resource, the NPUSCH collides with an inserted gap, the NPUSCH collides with a fully reserved uplink subframe, or the NPUSCH collides with a downlink reception. After determining that the first resource satisfying the first condition exists in the third OCC group, the first terminal may perform a process of postponing the NPUSCH transmission corresponding to the third OCC group.

For example, the first condition is that the NPUSCH collides with a gap inserted during transmission. If an NPUSCH sent by the first terminal collides with a gap inserted during transmission in the OCC group 0, the collided NPUSCH is postponed from the OCC group 0 to the next OCC group 1 that does not collide with the inserted gap.

For example, the first condition is that the NPUSCH collides with an NPRACH resource. If the NPUSCH sent by the first terminal collides with the NPRACH resource in the OCC group 0, the collided NPUSCH is postponed from the OCC group 0 to the next OCC group 1 that does not collide with the NPRACH resource.

For example, the first condition is that the NPUSCH collides with a fully reserved uplink subframe. If the NPUSCH sent by the first terminal collides with the fully reserved uplink subframe in the OCC group 0, the collided NPUSCH is postponed from the OCC group 0 to the next OCC group 1 that does not collide with the fully reserved uplink subframe.

For example, the first condition is that the NPUSCH collides with the downlink reception. If the NPUSCH sent by the first terminal collides with the downlink reception in the OCC group 0, the collided NPUSCH is postponed from the OCC group 0 to the next OCC group 1 that does not collide with the downlink reception. With reference to FIG. 7, if the NPUSCH (or the NPUSCH transmission or the transmission resource occupied by the NPUSCH) collides with the downlink reception in slot 0, the collided NPUSCH is postponed from the OCC group 0 to the next OCC group 1 that does not collide with the downlink reception, that is, the OCC group 1 consisting of slot 2 and slot 3.

In one example, the first condition includes at least one of the following: the NPUSCH collides with an NPRACH resource, the NPUSCH collides with an inserted gap, the NPUSCH collides with a fully reserved uplink subframe, and the NPUSCH collides with a downlink reception. After determining that the first resource satisfying the first condition exists in the third OCC group, the first terminal may perform a process of canceling the NPUSCH transmission in the third OCC group.

For example, the first condition is that the NPUSCH collides with the downlink reception. If the NPUSCH sent by the first terminal collides with the downlink reception in the OCC group 0, the collided NPUSCH is postponed from the OCC group 0 to the next OCC group 1 that does not collide with the downlink reception. Referring to FIG. 7, if the NPUSCH (or the NPUSCH transmission or the transmission resource occupied by the NPUSCH) collides with the downlink reception in the slot 0, the NPUSCH transmission in the OCC group 0 is cancelled, and the OCC group 0 may be cancelled simultaneously.

It should be understood that the foregoing is merely an exemplary illustration, and that all possible first conditions and their associated processing are not limited or exhaustive herein. In addition, in actual processing, the subsequent processing methods that may be adopted for a case where different first conditions are satisfied (that is, collisions with different resources occur) may be the same or different. For example, after the first terminal determines that the first resource satisfying the first condition that the NPUSCH collides with the NPRACH resource exists in the third OCC group, the first terminal may perform a process of adjusting the third OCC group. After determining that the first resource satisfying the first condition that the NPUSCH collides with the reserved uplink subframe exists in the third OCC group, the first terminal may perform a process of postponing the NPUSCH transmission corresponding to the third OCC group. After determining that the first resource satisfying the first condition that the NPUSCH collides with the downlink reception in the third OCC group, the first terminal may perform a process of canceling the NPUSCH transmission in the third OCC group. Here, the processing methods that may correspond to each of the first conditions are not limited or exhaustive, and as long as the first terminal performs any of the above processes when any one of the first conditions is satisfied, it is within the scope of protection of the present embodiment.

In some possible implementations, the operation that the first terminal sends a NPUSCH to which an OCC is applied in one or more first OCC groups includes one of the following. In a case that the fourth OCC group in which the NPUSCH collides with a reserved symbol exists in the one or more first OCC groups, the first terminal performs punctured transmission on a NPUSCH to which the OCC is applied in the fourth OCC group based on the reserved symbol. In a case that the fourth OCC group in which the NPUSCH collides with an SRS exists in the one or more first OCC groups, the first terminal performs punctured transmission on a NPUSCH to which the OCC is applied in the fourth OCC group based on the SRS. In a case that the fourth OCC group in which the NPUSCH collides with the reserved symbol exists in the one or more first OCC groups, the first terminal keeps transmitting the corresponding NPUSCH to which the OCC is applied at the position of the reserved symbol in the fourth OCC group. In a case that the fourth OCC group in which the NPUSCH collides with the SRS exists in the one or more first OCC groups, the first terminal keeps transmitting the corresponding NPUSCH to which the OCC is applied at the position of the SRS in the fourth OCC group.

Here, the first terminal may perform the above process after obtaining one or more first OCC groups based on one or more second OCC groups is completed.

It should be noted that in the processing provided in the present embodiment, first, the first terminal needs to determine whether the fourth OCC group in which the NPUSCH collides with the reserved symbol exists in the one or more first OCC groups, and/or determine that the fourth OCC group in which the NPUSCH collides with the SRS exists in the one or more first OCC groups. Therefore, the execution premise of this embodiment may be that the reserved symbol and/or the SRS are not included in the first condition.

Specifically, if the aforementioned first condition does not include that the NPUSCH collides with the reserved symbol, after one or more first OCC groups are determined based on the aforementioned embodiment, it may be further determined for the one or more first OCC groups that the fourth OCC group in which the NPUSCH collides with the reserved symbol exists in the one or more first OCC groups.

If the aforementioned first condition does not include that the NPUSCH collides with the SRS, after the one or more first OCC groups are determined based on the aforementioned embodiment, it may be further determined for the one or more first OCC groups that the fourth OCC group in which the NPUSCH collides with the SRS exists in the one or more first OCC groups.

If the aforementioned first condition does not include that the NPUSCH collides with the reserved symbol and does not include that the NPUSCH collides with the SRS, after one or more first OCC groups are determined based on the aforementioned embodiment, it may be further determined that the fourth OCC group in which the NPUSCH collides with the SRS exists in the one or more first OCC groups, and/or it may be determined that the fourth OCC group in which the NPUSCH collides with the reserved symbol exists in the one or more first OCC groups.

If the aforementioned first condition includes that the NPUSCH collides with the reserved symbol and includes that the NPUSCH collides with the SRS, the processing of the present embodiment may not be performed after one or more first OCC groups are determined based on the aforementioned embodiment.

Determining whether the fourth OCC group in which the NPUSCH collides with the reserved symbol exists in the one or more first OCC groups may be as follows. The first terminal determines whether the resource(s) in the one or more first OCC groups at least partially overlaps with the reserved symbol. If so, it is determined that the NPUSCH collides with the reserved symbol, and the first OCC group in which the NPUSCH collides with the reserved symbol is taken as the fourth OCC group. The processing manner for determining whether the fourth OCC group in which the NPUSCH collides with the SRS exists in the one or more first OCC groups is similar to the processing manner for determining whether the fourth OCC group in which the NPUSCH collides with the reserved symbol exists in the one or more first OCC groups, which will not be repeated.

The first terminal performs punctured transmission on the NPUSCH to which the OCC is applied in the fourth OCC group based on the reserved symbol, which may mean that the first terminal takes the position of the reserved symbol on the first OCC block of the fourth OCC group as the puncturing position on the first OCC block, determines a corresponding puncturing position on each other OCC block in the fourth OCC group except the first OCC block based on the puncturing position on the first OCC block in the fourth OCC group, performs puncturing on the NPUSCH transmission in the fourth OCC group based on the puncturing position on the first OCC block in the fourth OCC group and the puncturing position on each other OCC block in the fourth OCC group, and sends the NPUSCH to which the OCC is applied in the fourth OCC group after puncturing.

Here, determining the corresponding puncturing position on each other OCC block in the fourth OCC group except the first OCC block based on the puncturing position on the first OCC block in the fourth OCC group may mean determining a relative position of the puncturing position on the first OCC block in the fourth OCC group in the first OCC block, and taking the same relative position on each of one or more other OCC blocks in the fourth OCC group except the first OCC block as the puncturing position of each other OCC block. For example, if the fourth OCC group includes two OCC blocks, each OCC block includes one slot, and the reserved symbols are at the second symbol to the sixth symbol in the OCC block 1, the second symbol to the sixth symbol in the OCC block 1 are the puncturing positions of the OCC block 1, and similarly, the second symbol to the sixth symbol in the OCC block 2 are the puncturing positions of the OCC block 2.

The processing in which the first terminal performs punctured transmission on the NPUSCH to which the OCC is applied in the fourth OCC group based on the SRS is similar to the processing in which the first terminal performs punctured transmission on the NPUSCH to which the OCC is applied in the fourth OCC group based on the reserved symbol, which will not be repeated.

The first terminal keeps transmitting the corresponding NPUSCH at the position of the reserved symbol in the fourth OCC group, which may mean that the first terminal keeps sending the original NPUSCH corresponding to the position of the reserved symbol at the position of the reserved symbol in the fourth OCC group, and the first terminal does not send other information on the reserved symbol in the fourth OCC group.

The processing in which the first terminal keeps transmitting the corresponding NPUSCH at the position of the SRS in the fourth OCC group is similar to the processing in which the first terminal keeps transmitting the corresponding NPUSCH at the position of the reserved symbol in the fourth OCC group, which will not be repeated.

The collision of the NPUSCH with the SRS in the fourth OCC group of the one or more first OCC groups is illustrated exemplarily. For example, if the NPUSCH (or the NPUSCH transmission or the transmission resource occupied by the NPUSCH) sent by the first terminal collides with the SRS in the first OCC group, the first OCC group is taken as the fourth OCC group, and the NPUSCH transmission to which the OCC is applied in the fourth OCC group is punched based on the resource position at which the collision occurs, or the NPUSCH transmission to which the OCC is applied is performed at the resource position at which the collision occurs.

For example, as illustrated in FIG. 8, if the NPUSCH transmission (or the transmission resource occupied by the NPUSCH) collides with the SRS in the slot 0, and the NPUSCH transmission is not performed at the collided resource position, considering that the slot 0 and the slot 1 are in the same OCC group (OCC group 0), the NPUSCH transmission is not performed at the resource position corresponding to the slot 1, that is, the NPUSCH transmission to which the OCC is applied is punctured based on the position where the collision with the SRS occurs in the slot 0 of the OCC group 0, and the NPUSCH transmission to which the OCC is applied is also punctured at the same position in the slot 1 of the OCC group 0. Alternatively, the NPUSCH transmission to which the OCC is applied is still performed at the resource position where the collision occurs (that is, the SRS is not transmitted in the slot 0). Thus it is ensured that the NPUSCH to which the OCC is applied on the two slots of the OCC group 0 can be merged and received.

The collision of the NPUSCH with reserved symbol in the fourth OCC group of the one or more first OCC groups is illustrated exemplarily. For example, if the NPUSCH (or the NPUSCH transmission or the transmission resource occupied by the NPUSCH) sent by the first terminal collides with the reserved symbol in the first OCC group, the first OCC group is taken as the fourth OCC group, and the NPUSCH transmission to which the OCC is applied in the OCC group is punctured based on the symbol to which the collision occurs, or the NPUSCH transmission is performed on the symbol to which the collision occurs.

For example, as illustrated in FIG. 9, if the NPUSCH transmission (or the transmission resource occupied by the NPUSCH) collides with the reserved symbol in the slot 0, the NPUSCH transmission is not performed on the collided symbol, considering that the slot 0 and the slot 1 are in the same OCC group (OCC group 0), the NPUSCH transmission is not performed on the symbols corresponding to the slot 1, that is, the NPUSCH transmission to which the OCC is applied is punctured based on the position where the collision occurs with the reserved symbol in the slot 0 of the OCC group 0, and the NPUSCH transmission to which the OCC is applied is also punctured at the same position in the slot 1 of the OCC group 0. Alternatively, the NPUSCH transmission to which the OCC is applied is still performed on the symbols in which the collision occurs. The NPUSCH to which the OCC is applied on the two slots of the OCC group 0 can be merged and received.

In some possible implementations, the NPUSCH, for which the OCC is applied, sent in different first OCC groups of the one or more first OCC groups is calculated based on the first orthogonal sequence and the NPUSCH corresponding to the different first OCC groups.

The first orthogonal sequence is determined from multiple candidate orthogonal sequences based on an index of the first orthogonal sequence corresponding to the first terminal. The lengths of the orthogonal sequences corresponding to the multiple candidate orthogonal sequences are the same.

The index of the first orthogonal sequence corresponding to the first terminal may be pre-configured. For example, the network device may configure the index of the first orthogonal sequence corresponding to the first terminal. As long as the timing at which the network device configures, for the first terminal, the index of the first orthogonal sequence corresponding to the first terminal is before the first terminal sends the NPUSH to which the OCC is applied, it shall fall within the protection scope of this embodiment. The present embodiment is not limited to the manner in which the network device determines the index of the first orthogonal sequence corresponding to the first terminal and the manner in which the network device configures the index of the first orthogonal sequence corresponding to the first terminal.

The multiple candidate orthogonal sequences may be pre-configured, for example, the multiple candidate orthogonal sequences may be configured by the network device for the first terminal. As long as the timing at which the network device configures, for the first terminal, multiple candidate orthogonal sequences is before the first terminal sends the NPUSH to which the OCC is applied, it shall fall within the protection scope of this embodiment. The present embodiment is not limited to the manner in which the network device determines the multiple candidate orthogonal sequences and the manner in which the network device configures the multiple candidate orthogonal sequences.

It should be noted that the multiple candidate orthogonal sequences configured by the network device for different terminals of the at least one terminal are the same, and the indexes of the orthogonal sequences configured by the network device for different terminals of the at least one terminal are different, so that different terminals of the at least one terminal can use different orthogonal sequences. The manner and timing of configuring the index of the orthogonal sequence for each terminal and the manner and timing of configuring the multiple candidate orthogonal sequences for each terminal are similar to the above-described related description of the manner and timing of configuring the index of the orthogonal sequence for the first terminal and the manner and timing of configuring the multiple candidate orthogonal sequences for the first terminal, and thus the description will not be repeated.

Calculating the NPUSCH, to which the OCC is applied, sent in each first OCC group may include multiplying the first orthogonal sequence and the symbols of the NPUSCH corresponding to each first OCC group to obtain the NPUSCH, to which the OCC is applied, sent in each first OCC group. Here, multiplying the first orthogonal sequence and the symbols of the NPUSCH corresponding to each first OCC group to obtain the NPUSCH, to which the OCC is applied, sent in each first OCC group may mean multiplying the first orthogonal sequence and the symbols of the NPUSCH corresponding to each OCC block in each first OCC group to obtain the NPUSCH, to which the OCC is applied, sent in each first OCC group.

Application of OCC by the first terminal across slots occupied by NPUSCH transmission is illustrated exemplarily.

For example, the first terminal divides slots occupied by the NPUSCH into one or more second OCC groups according to an OCC length *N_{SF}* (i.e., a length of an orthogonal sequence), and finally determines one or more first OCC groups based on the one or more second OCC groups. Each first OCC group contains *N_{SF}* OCC blocks. The NPUSCH (or symbols of the NPUSCH) corresponding to each first OCC group is multiplied by the first orthogonal sequence *wᵣ*(*m*), *m* = 0,1 ... *N_{SF}* - 1, to obtain an NPUSCH to which the OCC is applied sent in each first OCC group. As described in the above embodiment, the same network device can manage at least one terminal that multiplexes the same transmission resources of the NPUSCH, the first terminal is any one of the at least one terminal, and the network device configures different OCC indexes, that is, different orthogonal sequence indexes *r* for different terminals in the at least one terminal, so that different terminals will use different OCC indexes, that is, different orthogonal sequence indexes *r,* so that code division multiplexing of at least one terminal can be realized in the same OCC group.

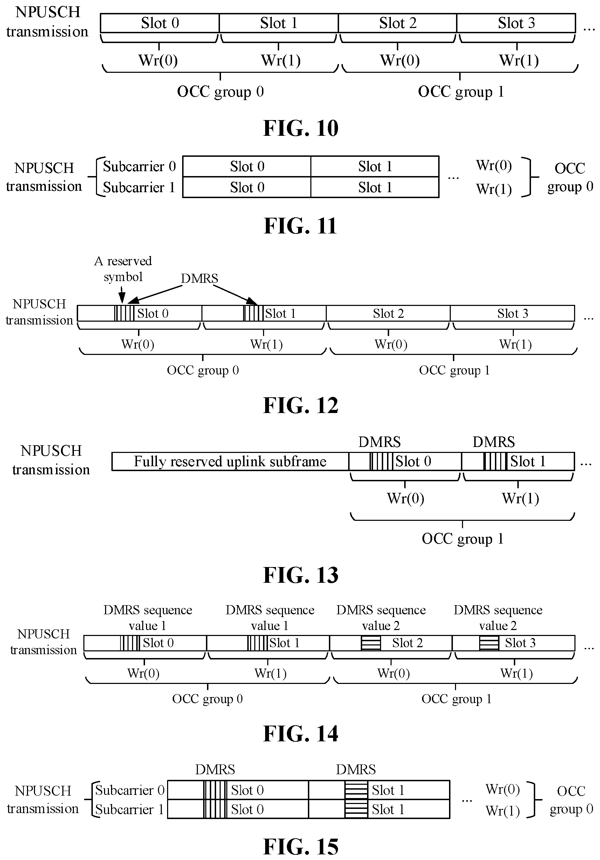

Taking FIG. 10 as an example, when the NPUSCH transmission occupies multiple slots (for example, the slots 0 to 3 are illustrated in FIG. 10) and the OCC length (that is, the length of an orthogonal sequence) *N_{SF}* = 2, every two slots occupied by the NPUSCH transmission are taken as the first OCC group, and each slot in each first OCC group (for example, the OCC group 0 and the OCC group 1 illustrated in FIG. 10) is an OCC block. The first terminal multiplies the NPUSCH (or the symbols of the NPUSCH) corresponding to each first OCC group by the corresponding first orthogonal sequence *wᵣ* (*m*) to obtain the NPUSCH to which the OCC is applied sent in each first OCC group. For example, as illustrated in FIG. 10, the NPUSCH (or the symbols of the NPUSCH) corresponding to the slot 0 and the slot 1 in the OCC group 0 is multiplied by the first orthogonal sequences *wᵣ*(0), *wᵣ* (1), respectively, to obtain the NPUSCH to which the OCC is applied sent in the OCC group 0. The NPUSCH (or the symbols of the NPUSCH) corresponding to the slot 2 and the slot 3 in the OCC group 1 is multiplied by the first orthogonal sequences w*ᵣ* (0), wᵣ (1), respectively, to obtain the NPUSCH to which the OCC is applied sent in the OCC group 1. It should also be noted that there may be examples of wᵣ(0), *wᵣ*(1) in at least some of the exemplary drawings (for example, FIG. 4 to FIG. 13) provided by the multiple examples of the present disclosure, and the related description of *wᵣ*(0), *wᵣ* (1) in these exemplary drawings is the same as that in FIG. 10, and the description thereof will not be repeated.

The processing of at least one terminal is described as an example. The user 1 (that is, the terminal 1) obtains the orthogonal sequence 1 *w*₀(*m*) = [1 1], i.e., *w*₀(0) = 1, *w*₀(1) = 1 by using the OCC index *r* = 0. The orthogonal sequence 1 multiplies with the corresponding NPUSCH in each of the first OCC groups obtained by dividing based on slot to obtain the NPUSCH to which the OCC is applied sent by each of the first OCC groups. The user 2 (that is, the terminal 1) obtains the orthogonal sequence 2 *w*₁(*m*) = [1 - 1], i.e., *w*₁(0) = 1, *w*₁(1) = -1 by using the OCC index *r* = 1. The orthogonal sequence 2 multiplies with the corresponding NPUSCH in each of the first OCC groups obtained by dividing based on slot to obtain the NPUSCH to which the OCC is applied sent by each of the first OCC groups. In this way, code division multiplexing is achieved for users 1 and 2 within the OCC group.

The application of the OCC by the first terminal within the slot occupied by the NPUSCH transmission is illustrated exemplarily.

For example, the first terminal divides subcarriers occupied by the NPUSCH transmission into one or more second OCC groups according to the OCC length *N_{SF}* (i.e., the length of the orthogonal sequence), and finally determines one or more first OCC groups based on the one or more second OCC groups. Each first OCC group contains *N_{SF}* OCC blocks, and is multiplied by the corresponding first orthogonal sequence to obtain a NPUSCH to which the OCC is applied sent in each first OCC group. As described in the above embodiment, the same network device can manage at least one terminal that multiplexes the same transmission resources of the NPUSCH, the first terminal is any one of the at least one terminal, and the network device will configure different OCC indexes, that is, different orthogonal sequence indexes *r*, for different terminals in the at least one terminal, so that different terminals will use different OCC indexes, that is, different orthogonal sequence indexes *r*, so that code division multiplexing of at least one terminal can be realized in the same OCC group.

Taking FIG. 11 as an example, the NPUSCH transmission occupies multiple subcarriers (for example, subcarrier 0 to subcarrier 1 illustrated in FIG. 11). When the OCC length *N_{SF}* = 2, the two subcarriers occupied by the NPUSCH transmission are taken as one first OCC group, and each subcarrier in the first OCC group (for example, OCC group 0 illustrated in FIG. 11) is an OCC block. The first terminal multiplies the NPUSCH (or the symbols of the NPUSCH) corresponding to each first OCC group by the corresponding first orthogonal sequence *wᵣ*(*m*) to obtain the NPUSCH to which the OCC is applied sent in each first OCC group. For example, as illustrated in FIG. 11, the NPUSCH (or the symbols of the NPUSCH) corresponding to the subcarrier 0 and the subcarrier 1 in the OCC group 0 is multiplied by the first orthogonal sequences*wᵣ*(0), *wᵣ*(1), respectively, to obtain the NPUSCH to which the OCC is applied sent in the OCC group 0.

The processing of at least one terminal is described exemplarily. The user 1 (that is, the terminal 1) obtains the orthogonal sequence 1 *w*₀(*m*) = [1 1], i.e., *w*₀(0) = 1, *w*₀(1) = 1 by using the OCC index *r* = 0. The orthogonal sequence 1 multiplies with the corresponding NPUSCH in each of the first OCC groups obtained by dividing based on subcarriers, to obtain the NPUSCH to which the OCC is applied sent by each of the first OCC groups. The user 2 (that is, the terminal 1) obtains the orthogonal sequence 2 *w*₁(*m*) = [1 - 1] , i.e., *w*₁(0) = 1, *w*₁(1) = -1 by using the OCC index *r* = 1. The orthogonal sequence 2 multiplies with the corresponding NPUSCH in each of the first OCC groups obtained by dividing based on subcarriers, to obtain the NPUSCH to which the OCC is applied sent by each of the first OCC groups. In this way, code division multiplexing is achieved for users 1 and 2 within the OCC group.

In some possible implementations, a scrambling sequence corresponding to a NPUSCH to which the OCC is applied sent in each of the one or more first OCC groups is obtained by initializing based on a first frame index and/or the first slot index of each of the first OCC groups.

For an NPUSCH to which OCC is not applied, initialization processing is performed only once based on parameters such as the first frame index and the first slot index. However, in the present embodiment, the NPUSCH to which the OCC is applied sent in each first OCC group is scrambled, and different first OCC groups adopt different parameter values to initialize the scrambling sequence. Specifically, for the NPUSCH to which the OCC is applied, the scrambling sequence is initialized at each first OCC group according to the first frame index and the first slot index of the first OCC group. That is, the process of the first terminal sending the NPUSCH to which the OCC is applied in each first OCC group may include the following operations. The first terminal performs initialization calculation on the scrambling sequence based on the first frame index and/or the first slot index of each first OCC group to obtain the scrambling sequence corresponding to each first OCC group. The NPUSCH corresponding to each first OCC group is scrambled based on the scrambling sequence corresponding to each first OCC group, and the scrambled NPUSCH is modulated based on the first orthogonal sequence to obtain and send the NPUSCH to which OCC is applied in the first OCC group.

For example, for the NPUSCH to which the OCC is applied, a scrambling sequence should be initialized at each first OCC group, and the scrambling sequence initialization may be calculated by using the following formula: ${c}_{init} = {n}_{RNTI} ⋅ {2}^{14} + {n}_{f} mod 2 ⋅ {2}^{13} + \left⌊{n}_{s}/2\right⌋ ⋅ {2}^{9} + {N}_{ID}^{Ncell}$ . Here, *n*_{RNTI} is the RNTI associated with the NPUSCH transmission, ${N}_{ID}^{Ncell}$ is the cell ID, and *n_{f}* and *nₛ* are the first frame index and the first slot index of the first OCC group, respectively.

In general, the process in which the first terminal sends the NPUSCH to which the OCC is applied may include the following processes. The first terminal obtains one or more second OCC groups by dividing based on the transmission resources occupied by the NPUSCH and the length of the orthogonal sequence. One or more first OCC groups for sending the NPUSCH are determined based on the one or more second OCC groups. The first orthogonal sequence is determined from multiple candidate orthogonal sequences based on an index of the first orthogonal sequence. The NPUSCH corresponding to each first OCC group is scrambled based on the scrambling sequence corresponding to each first OCC group, the scrambled NPUSCH is modulated based on the first orthogonal sequence, and the NPUSCH to which the OCC is applied in each first OCC group is obtained and sent.

In some possible implementations, the method further includes the following operation. The first terminal sends DMRS(s) to which the OCC is applied in one or more fifth OCC groups. The one or more fifth OCC groups are at least part of the one or more first OCC groups, and the DMRS(s) to which the OCC is applied is/are carried by the NPUSCH to which the OCC is applied.

In the related art, the DMRS in the NB-IoT system does not support multi-user multiplexing, but when the first terminal sends the NPUSCH to which the OCC is applied, the first terminal needs to send the DMRS(s) to which the OCC is applied in the OCC group in order to ensure that the network device can perform channel estimation and reception on the NPUSCH to which the OCC is applied.

The fifth OCC group may refer to an OCC group for sending DMRS(s) to which the OCC is applied. Each of the one or more fifth OCC groups includes one or more OCC blocks, and different OCC blocks of the one or more OCC blocks correspond to different time domain ranges and/or different frequency domain ranges. It should be understood that the fifth OCC group and the individual OCC blocks may be continuous or discontinuous in the time domain and/or frequency domain.

Alternatively, each of the one or more first OCC groups needs to send DMRS(s), and each of the first OCC groups is capable of sending DMRS(s), then all of the first OCC groups are taken as the fifth OCC groups.

Alternatively, if only position(s) within the first part of the first OCC group(s) of the one or more first OCC groups needs to send DMRS(s), and the second part of the first OCC group(s) of the one or more first OCC groups does not need to send DMRS(s), and all of the first part of the first OCC group(s) are capable of sending DMRS(s), then the first part of the first OCC group(s) may be taken as the fifth OCC group.

Alternatively, if only position(s) within the first part of the one or more first OCC group(s) needs to send DMRS(s), and the second part of the first OCC group(s) does not need to send DMRS(s), and only the third part of the first part of the first OCC group(s) are capable of sending DMRS(s), then the third part of the first OCC group(s) may be taken as the fifth OCC group.

In one embodiment, the method further includes one of following. In a case that the sixth OCC group in which DMRS(s) collide(s) with a reserved symbol exists in the one or more first OCC groups, the first terminal does not take the sixth OCC group as one of the one or more fifth OCC groups. In a case that the sixth OCC group in which the DMRS(s) collide(s) with the reserved symbol exists in the one or more first OCC groups, the first terminal takes the sixth OCC group as one of the one or more fifth OCC groups.

The specific processing manner of the first terminal determining that the sixth OCC group in which the DMRS(s) collide(s) with the reserved symbol exists in the one or more first OCC groups may include the following operation. The first terminal determines whether the DMRS in the one or more first OCC groups at least partially overlaps with the reserved symbol, if so, it is determined that the DMRS collides with the reserved symbol, and the first OCC group in which the DMRS collides with the reserved symbol is taken as the sixth OCC group.

In one example, the collision of the DMRS with the reserved symbol may also be the second condition. That is, the first terminal determines that the sixth OCC group in which the DMRS(s) collide(s) with the reserved symbol exists in the one or more first OCC groups, which may mean that the first terminal determines that the sixth OCC group satisfying the second condition exists in the one or more first OCC groups. The specific processing manner of the first terminal determining that the sixth OCC group satisfying the second condition exists in the one or more first OCC groups may include: the first terminal determines whether the DMRS(s) in the one or more first OCC groups at least partially overlaps with the reserved symbol, if so, it is determined that the DMRS collides with the reserved symbol, and the first OCC group where the DMRS(s) collides with the reserved symbol is taken as the sixth OCC group satisfying the second condition.

The first terminal not taking the sixth OCC group as one of the one or more fifth OCC groups may be that the first terminal does not take the sixth OCC group as one of the one or more fifth OCC groups, and the first terminal does not send the DMRS on each OCC block in the sixth OCC group. Specifically, the first DMRS is not sent on each OCC block in the sixth OCC group, which may mean that if the DMRS collides with the reserved symbol at the first relative position of the second OCC block in the sixth OCC group, it is determined that the DMRS is not sent at the first relative position of the second OCC block in the sixth OCC group, and the DMRS is also not sent at the first relative position of the other OCC blocks in the sixth OCC group except the second OCC block.

The first terminal taking the sixth OCC group as one of the one or more fifth OCC groups may be that the first terminal take the sixth OCC group as one of the one or more fifth OCC groups, keeps sending the DMRS(s) to which the OCC is applied at position(s) in which the collision with the reserved symbol occurs in the sixth OCC group, and does not send other information on the reserved symbol in the sixth OCC group.

In the present embodiment, the manner of the first terminal determining whether to take any one of the first OCC groups as the fifth OCC group may be as follows. First, whether the first OCC group satisfies the second condition is determined, and the second condition may include that the DMRS collides with the reserved symbol. That is, the first terminal determines whether the DMRS collides with the reserved symbol in the first OCC group, and if so, the first terminal takes the first OCC group as the sixth OCC group, and cancels sending the DMRS in the sixth OCC group, or sends the DMRS to which the OCC is applied on the collided symbol in the sixth OCC group (that is, the sixth OCC group is taken as the fifth OCC group and the DMRS to which the OCC is applied is still sent).

For example, as illustrated in FIG. 12, if the DMRS sent by the first terminal collides with the reserved symbol in the slot 0, the transmission of the DMRS is cancelled at the collided symbol position(s) in the slot 0 of the OCC group 0, and considering that the slot 0 and the slot 1 are in the same OCC group, the DMRS is not sent on the same symbol(s) corresponding to the slot 1 of the OCC group 0. Alternatively, the DMRS to which the OCC is applied is still sent on the symbol(s) in which the collision occurs, that is, the DMRS to which the OCC is applied is still sent on the slot 0 and the slot 1 of the OCC group 0, and other information is not sent on the reserved symbol. Thus it is ensured that the DMRSs to which the OCC is applied on the two slots can be merged and received.

In some possible examples, the second condition may further include that the DMRS(s) collide(s) with at least one of following: an NPRACH resource, an inserted gap, a reserved uplink subframe, or a downlink reception.

In this example, the processing method of the first terminal may further include the following operation. The first terminal determines whether the DMRS(s) in the one or more first OCC groups collides with the resource included in the second condition, and if so, the first OCC group where the DMRS(s) collide(s) with the resource included in the second condition is taken as the tenth OCC group. The first terminal performs one of following: canceling sending the NPUSCH and the DMRS(s) in the tenth OCC group, postponing transmission of the NPUSCH and the DMRS(s) corresponding to the tenth OCC group, or adjusting the tenth OCC group.

The present example is particularly applicable to the scenario in which the first condition is not used in the previous embodiment. In other words, if the first condition is used in determining the one or more first OCC groups in the foregoing embodiments, the present example may not be performed.

In this example, the description of canceling the NPUSCH transmission in the tenth OCC group is similar to the description of canceling the NPUSCH transmission in the third OCC group in the previous embodiment, but the only difference is that in this example, not only the transmission of the NPUSCH is cancelled, but also the transmission of the DMRS(s) corresponding to the tenth OCC group needs to be cancelled, which will not be repeated here.

In this example, the description of postponing transmission of the NPUSCH and the DMRS(s) corresponding to the tenth OCC group is similar to the description of postponing the NPUSCH transmission corresponding to the third OCC group in the previous embodiment, but the only difference is that in this example, not only the NPUSCH transmission is postponed, but also the DMRS transmission corresponding to the tenth OCC group needs to be postponed, and the description will not be repeated here.

In this example, the description of adjusting the tenth OCC group is similar to the description of adjusting the third OCC group in the foregoing embodiment, only difference is that in this example, after adjusting the tenth OCC group to obtain the postponed tenth OCC group, not only the NPUSCCH corresponding to the original tenth OCC group is sent in the postponed tenth OCC group, but also the DMRS corresponding to the original tenth OCC group is sent in the postponed tenth OCC group, which will not be repeated here.

For example, the second condition is that the DMRS collides with a fully reserved uplink subframe. If a DMRS collides with a fully reserved uplink subframe in the tenth OCC group, the collided DMRS is postponed to be sent to the next OCC group that does not collide with the fully reserved uplink subframe. For example, in FIG. 13, if the DMRS collides with the fully reserved uplink subframe, the DMRS in which the collision occurs is postponed to be sent to the slot 0, and the OCC group is determined based on the slot that does not collide with the fully reserved uplink subframe, that is, the slot 0 and the slot 1 constitute one OCC group 1.

In some embodiments, the DMRS(s) to which the OCC is applied uses the same DMRS sequence value on each OCC block in the OCC group. The DMRS(s) to which the OCC is applied sent in each of the one or more fifth OCC groups is/are obtained by calculating based on the first orthogonal sequence and a DMRS sequence value corresponding to each OCC block in each fifth OCC group. Different OCC blocks in the same fifth OCC group correspond to the same DMRS sequence value.

Taking the calculation manner of the DMRS sequence value corresponding to the k-th OCC block in the m-th fifth OCC group as an example, the calculation manner of the first terminal for the DMRS sequence value corresponding to each OCC block in each fifth OCC group is described exemplarily. The specific content may include the following contents.

In a case that one OCC block includes only one time unit or one subcarrier, the first index value corresponding to the n-th time unit or the n-th subcarrier in the k-th OCC block of the m-th fifth OCC group is obtained by dividing the sequence number value corresponding to the n-th time unit or the n-th subcarrier in the k-th OCC block of the m-th fifth OCC group by the length of the orthogonal sequence and then rounding down, a corresponding pseudo-random sequence value is obtained from the binary pseudo-random sequence based on the first index value (*p*), and a DMRS sequence value corresponding to an n-th time unit or an n-th subcarrier in the k-th OCC block of the m-th fifth OCC group is obtained by calculating based on the first index value. Herein, n, m, k, and p are all integers greater than or equal to 0.

In a case that one OCC block includes multiple time units or multiple subcarriers, the first value is obtained by multiplying the length of the orthogonal sequence with the number of multiple time units or the number of multiple subcarriers, the second value is obtained by dividing the sequence number value corresponding to the n-th time unit or the n-th subcarrier in the k-th OCC block of the m-th fifth OCC group by the first value and rounding down, the third value is obtained by performing modulo calculation on the sequence number value corresponding to the n-th time unit or the n-th subcarrier in the k-th OCC block of the m-th fifth OCC group and the number of the multiple time units or the number of the multiple subcarriers, the first index value corresponding to the n-th time unit or the n-th subcarrier in the k-th OCC block of the m-th fifth OCC group is obtained by adding the second value and the third value, and the DMRS sequence value corresponding to the n-th time unit or the n-th subcarrier in the k-th OCC block of the m-th fifth OCC group is obtained by calculating based on the first index value.

The sequence number value is greater than or equal to 0 and less than or equal to a specified value, and the sequence number value is incremented with an index or number corresponding to a time unit (such as a slot), or the sequence number value is incremented with an index or number corresponding to a subcarrier. The specified value may be equal to ${M}_{rep}^{NPUSCH} {N}_{slots}^{UL} {N}_{RU}$, and the related description of the respective parameters is the same as that of the previous embodiment, which will not be described in detail. Alternatively, the specified value may be equal to ${N}_{sc}^{RU}$ (the number of subcarriers).

For example, with reference to FIG. 14, for a single carrier uplink transmission, the DMRS sequence is ${r}_{u} \left(n\right) = \frac{1}{\sqrt{2}} \left(1+j\right) \left(1-2c\left(n\right)\right) w \left(n mod 1 6\right) , 0 \leq n < {M}_{rep}^{NPUSCH} {N}_{slots}^{UL} {N}_{RU}$, that is, the DMRS sequence values on different slots are different. If OCC is applied across slots occupied by NPUSCH transmission, it is necessary to ensure that the DMRS on each slot in the same OCC group (for example, slot 0 and slot 1 in OCC group 0 in FIG. 14, or slot 2 and slot 3 in OCC group 1) uses the same DMRS sequence value, that is, it may be calculated by the following formula: ${r}_{u} \left(p\right) = \frac{1}{\sqrt{2}} \left(1+j\right) \left(1-2c\left(p\right)\right) \left(p mod 1 6\right) , p = \left⌊n/{N}_{SF}\right⌋ , 0 \leq n < {M}_{rep}^{NPUSCH} {N}_{slots}^{UL} {N}_{RU}$*.* Here, *p* is the first index value in the previous example, n is the sequence number value of the n-th time unit, and the related description of *N_{SF}* and ${M}_{rep}^{NPUSCH} {N}_{slots}^{UL} {N}_{RU}$ is the same as that in the previous embodiment, which will not be described in detail. In this way, when the DMRS sequence value of each slot in the same OCC group is calculated by the above formula, since the values after the sequence values corresponding to each slot in the same OCC group is divided by the length of the orthogonal sequence and then rounding down are the same, the DMRS sequence values corresponding to each slot in the same OCC group may be made to be the same. For example, as used in FIG. 14, the DMRS on the OCC group 0 all use the DMRS sequence value 1 and the DMRS on the OCC group 1 all use the DMRS sequence value 2, thus ensuring that the network device can combine the DMRSs in the OCC group.

Alternatively, if each OCC block in the OCC group includes T slots, it is necessary to ensure that the DMRS on each T slots in the OCC group uses the same DMRS sequence value (that is, the DMRSs on the slots at the same position on different OCC blocks in the same OCC group use the same DMRS sequence value, and the DMRSs on different slots in the same OCC block in the same OCC group use different DMRS sequence values), that is, ${r}_{u} \left(p\right) = \frac{1}{\sqrt{2}} \left(1+j\right) \left(1-2c\left(p\right)\right) \left(p mod 1 6\right) , p = \left⌊n/\left(T∗{N}_{SF}\right)\right⌋ + n mod T , 0 \leq n < {M}_{rep}^{NPUSCH} {N}_{slots}^{UL} {N}_{RU}$*.* Here, T is the number of slots included in one OCC block, and the related description of *p*, n, *N_{SF}* and ${M}_{rep}^{NPUSCH} {N}_{slots}^{UL} {N}_{RU}$ is the same as that of the above-described embodiment, which will not be described in detail. In this way, when the DMRS sequence value of each slot in the same OCC group is calculated by the above formula, since the sequence values corresponding to the slots in different OCC blocks in the same OCC group may be calculated to obtain the same value of *p*, it is possible to make the DMRS sequence values corresponding to the slots in the same position in different OCC blocks in the same OCC group the same, and the DMRS sequence values corresponding to the different slots in the same OCC block are different. For example, the OCC block 1 on the OCC group 0 includes the slot 0 and the slot 1, and the OCC block 2 includes the slot 2 and the slot 3. The DMRSs on the two slots in the OCC block 1 may use the DMRS sequence value 1 and the sequence value 2, and the DMRSs on the two slots in the OCC block 2 may use the DMRS sequence value 1 and the sequence value 2, thus ensuring that the network device can combine the DMRSs in the OCC group.

For another example, with reference to FIG. 15, for multi-carrier uplink transmission, the DMRS sequence is ${r}_{u} \left(n\right) = {e}^{jαn} {e}^{j \frac{ϕ \left(n\right) π}{4}} , 0 \leq n < {N}_{sc}^{RU}$, that is, the DMRS sequence values on different subcarriers are different. If the terminal device applies the OCC across the subcarriers occupied by the NPUSCH transmission, it is necessary to ensure that each subcarrier in the OCC group (for example, subcarrier 0 and subcarrier 1 in the OCC group 0 in FIG. 15) uses the same DMRS sequence value, that is, ${r}_{u} \left(p\right) = {e}^{jαp} {e}^{j \frac{ϕ \left(p\right) π}{4}} , p = \left⌊n/{N}_{SF}\right⌋ , 0 \leq n < {N}_{sc}^{RU}$. Here, the meanings of each parameter in the formula have been described in the above-described various embodiments, and will not be described in detail. In this way, when the DMRS sequence value of each subcarrier in the same OCC group is calculated by the above formula, since the values after the sequence values corresponding to each subcarrier in the same OCC group is divided by the length of the orthogonal sequence and then rounding down are the same, the DMRS sequence values corresponding to each subcarrier in the same OCC group may be made to be the same. For example, the DMRSs on subcarrier 0 and subcarrier 1 in OCC group 0 in FIG. 15 may use the same DMRS sequence value.

Alternatively, if each OCC block in the OCC group includes T subcarriers, it is necessary to ensure that the DMRS on each T subcarriers in the OCC group uses the same DMRS sequence value (that is, DMRSs on subcarriers at the same position on different OCC blocks in the same OCC group uses the same DMRS sequence value, and DMRSs on different subcarriers in the same OCC block in the same OCC group use different DMRS sequence values), that is, ${r}_{u} \left(p\right) = {e}^{jαp} {e}^{j \frac{ϕ \left(p\right) π}{4}} , p = \left⌊n/\left(T∗{N}_{SF}\right)\right⌋ + n mod T , 0 \leq n < {N}_{sc}^{RU}$. Here, the meanings of each parameter in the formula have been described in the above-described various embodiments, and will not be described in detail. In this way, when the DMRS sequence value of each subcarrier in the same OCC group is calculated by the above formula, since the sequence values corresponding to the subcarriers in different OCC blocks in the same OCC group may be calculated to obtain the same value of *p*, it is possible to make the DMRS sequence values corresponding to the subcarriers in the same position in different OCC blocks in the same OCC group the same, and the DMRS sequence values corresponding to the different subcarriers in the same OCC block are different, so that the network device can combine the DMRSs in the OCC group.

In some embodiments, the DMRS to which the OCC is applied sent in each of the one or more fifth OCC groups is obtained based on multiplying the first orthogonal sequence and a DMRS sequence value corresponding to each OCC block in each of the fifth OCC groups.

The first terminal sends the DMRS to which the OCC is applied in one or more fifth OCC groups, which may be that the first terminal sends the DMRS to which the OCC is applied by multiplying the DMRS on each OCC block in each fifth OCC group by the corresponding first orthogonal sequence.

For example, in FIG. 14, for single carrier uplink transmission, if OCC is applied across slots occupied by NPUSCH transmission, the DMRS on each slot in the OCC group is multiplied by the corresponding orthogonal sequence, i.e., *wᵣ*(*m*) ∗ *rᵤ*(*p*). For example, in FIG. 14, the DMRSs on slot 0 and slot 1 in the OCC group 0 is multiplied by the corresponding first orthogonal sequence *wᵣ*(0), *wᵣ*(1), and the DMRSs on slot 2 and slot 3 in the OCC group 1 is multiplied by the corresponding first orthogonal sequence *wᵣ*(0), *wᵣ*(1).

For example, in FIG. 15, for multi-carrier uplink transmission, if the terminal device applies OCC in the slots occupied by the NPUSCH transmission, the DMRS on each subcarrier in the OCC group is multiplied by the corresponding orthogonal sequence, i.e., *wᵣ*(*m*) ∗ *rᵤ*(*p*). For example, in FIG. 15, the DMRSs on subcarrier 0 and subcarrier 1 in the OCC group 0 are multiplied by the corresponding first orthogonal sequence *wᵣ*(0), *wᵣ*(1).

In still some embodiments, the DMRS to which the OCC is applied sent in each of the one or more fifth OCC groups is obtained by calculating based on the first orthogonal sequence and the DMRS sequence value corresponding to each OCC block in each fifth OCC group. Different OCC blocks in the same fifth OCC group correspond to the same DMRS sequence value, and the DMRS sequence value corresponding to each OCC block in each fifth OCC group is calculated based on a DMRS sequence cyclic shift value, and the DMRS sequence cyclic shift value has a correspondence relationship with an index of the first orthogonal sequence.

In the present embodiment, the operation that the first terminal sends the DMRS to which the OCC is applied in one or more fifth OCC groups may be determining a DMRS sequence cyclic shift value corresponding to an index of the first orthogonal sequence, and calculating a DMRS sequence value corresponding to each OCC block in each fifth OCC group based on the DMRS sequence cyclic shift value, to send the DMRS to which the OCC is applied.

Calculating the DMRS sequence value corresponding to each OCC block in each fifth OCC group based on the DMRS sequence cyclic shift value may include the following operations.

When one OCC block includes only one time unit or one subcarrier, the first index value corresponding to the n-th time unit or the n-th subcarrier in the k-th OCC block of the m-th fifth OCC group is obtained by dividing the sequence number value corresponding to the n-th time unit or the n-th subcarrier in the k-th OCC block of the m-th fifth OCC group by the length of the orthogonal sequence and then rounding down, a corresponding pseudo-random sequence value is obtained from the binary pseudo-random sequence based on the first index value (*p*), and the DMRS sequence value corresponding to the n-th time unit or the n-th subcarrier in the k-th OCC block of the m-th fifth OCC group is obtained by calculating based on the first index value and the DMRS sequence cyclic shift value.

In a case that one OCC block includes multiple time units or multiple subcarriers, the first value is obtained by multiplying the length of the orthogonal sequence and the number of multiple time units or the number of multiple subcarriers; the second value is obtained by dividing the sequence number value corresponding to the n-th time unit or the n-th subcarrier in the k-th OCC block of the m-th fifth OCC group by the first value and rounding down, the third value is obtained by performing modulo calculation on the sequence number value corresponding to the n-th time unit or the n-th subcarrier in the k-th OCC block of the m-th fifth OCC group and the number of the multiple time units or the number of the multiple subcarriers, the first index value corresponding to the n-th time unit or the n-th subcarrier in the k-th OCC block of the m-th fifth OCC group is obtained by adding the second value and the third value, and the DMRS sequence value corresponding to the n-th time unit or the n-th subcarrier in the k-th OCC block of the m-th fifth OCC group is obtained by calculating based on the first index value and the DMRS sequence cyclic shift value.

Taking multi-carrier uplink transmission as an example, if the first terminal applies OCC across subcarriers occupied by NPUSCH transmission (one subcarrier is one OCC block), the DMRS sequence value in the OCC group is ${r}_{u} \left(p\right) = {e}^{jα \left(r\right) p} {e}^{j \frac{ϕ \left(p\right) π}{4}} , p = \left⌊n/{N}_{SF}\right⌋ , 0 \leq n < {N}_{sc}^{RU}$, *r* = 0, ...*N_{SF}* . Here, the sequence cyclic shift value *α*(*r*) corresponds to the index of the first orthogonal sequence, and the indexes *r* of different orthogonal sequences of different terminals correspond to different DMRS sequence cyclic shift values *α*(*r*), thereby ensuring that orthogonality is satisfied between DMRSs sent by users (terminals) using different orthogonal sequence indexes.

In some embodiments, DMRSs to which the OCC is applied sent by different OCC blocks in the same fifth OCC group in the one or more fifth OCC groups correspond to the same sequence group index.

This embodiment is particularly applicable to DMRS using sequence group frequency hopping, in which case, DMRSs in the same fifth OCC group can be made to use the same sequence group index by using the method provided in this embodiment.

A sequence group index corresponding to the DMRS to which the OCC is applied sent by each OCC block in each fifth OCC group is determined based on the first slot index in the fifth OCC group.

Specifically, the sequence group index corresponding to the DMRS to which the OCC is applied sent by each OCC block in each fifth OCC group is determined based on the sequence group frequency hopping pattern corresponding to each fifth OCC group, and the sequence group frequency hopping corresponding to each fifth OCC group is determined based on the first slot index in the fifth OCC group.

For example, for a DMRS that uses sequence group frequency hopping and does not apply OCC, the corresponding sequence group frequency hopping pattern is ${f}_{gh} \left(n′\right) = \left({\sum }_{i = 0}^{7} c \left(8n′+i\right) ⋅ {2}^{i}\right) mod {N}_{seq}^{RU}$ . Here, *n*' is the slot index *nₛ* or the first slot index *nₛ* of the RU, ${N}_{seq}^{RU}$ is determined according to the higher layer parameter. In this case, the terminal determines the sequence group frequency hopping index $u = \left({f}_{gh}\left(n′\right)+{f}_{ss}\right) mod {N}_{seq}^{RU}$. Here, *fₛₛ* is the sequence shift pattern, and is determined according to the higher layer parameters. It may be seen that in the scenario of DMRS that uses sequence group frequency hopping and does not apply OCC, DMRSs on different slots use different sequence group frequency hopping patterns *f*_{gh}(*n*'), resulting in that different sequence group indexes *u* are used by DMRSs on different slots.

However, the scenario provided in this embodiment is that DMRS that uses sequence group frequency hopping and applies OCC. In this scenario, the sequence group indexes *u* used by the DMRSs of the same fifth OCC group should be the same. Based on this, in this embodiment, the sequence group frequency hopping pattern *f*_{gh}(*n*') used by the DMRSs in the same fifth OCC group may be determined according to the first slot index *nₛ* of the OCC group, and the sequence group index used by the DMRS on each OCC block in the same fifth OCC group is determined based on the same sequence group frequency hopping pattern. In this way, the sequence group indexes *u* used by the DMRSs of the same fifth OCC group may be made the same, so that it is ensured that the network device can combine the DMRSs in the OCC group.

Next, related processing on the network device will be described.

In some possible implementations, on the network device side, the one or more first OCC groups are determined based on one or more second OCC groups. The one or more second OCC groups are determined based on transmission resources occupied by the NPUSCH and/or a length of the orthogonal sequence.

The transmission resources occupied by the NPUSCH are related to the number of repetitions of the NPUSCH. The number of repetitions of the NPUSCH is determined based on at least one of following: the number of repetitions of the NPUSCH configured by a network device, a maximum TBS configured by a high layer when performing EDT, a TBS corresponding to the NPUSCH transmission, or a length of an orthogonal sequence.

In the present embodiment, the description of the method of determining each second OCC group, the transmission resources occupied by the NPUSCH, the length of the orthogonal sequence, and the like are the same as those in the previous embodiment, that is, the second OCC group(s) determined by the network device should be the same as the second OCC group(s) determined by each terminal, and thus the description will not be repeated here.

In addition, since the relevant parameters configured by the network device for the first terminal are also configured to at least one terminal that multiplexes the transmission resources of the NPUSCH, the timing and the manner in which the network device configures for each terminal are the same as those in the previous embodiment, and will not be described again.

In some possible embodiments, on the network device side, the method further includes the following operation. In a case that the first resource satisfying the first condition exists in the third OCC group of the one or more second OCC groups, the network device performs one of following: cancelling reception of NPUSCH in the third OCC group, postponing reception of the NPUSCH corresponding to the third OCC group, or adjusting the third OCC group.

The description of the first condition is the same as that of the above-described embodiment, and will not be described in detail.

The manner of specifically specifying the third OCC group by the network device is the same as the processing method of the first terminal described above, and will not be described in detail.

The canceling reception of the NPUSCH in the third OCC group may mean that the network device does not take the third OCC group as one of the one or more first OCC groups and cancels reception of the corresponding NPUSCH in the third OCC group.

The postponing reception of the NPUSCH corresponding to the third OCC group may include the following operations. The network device does not take the third OCC group as one of the one or more first OCC groups, and in a case that there is one or more remaining second OCC groups in which a resource satisfying the first condition does not exist after the third OCC group, the first second OCC group in which a resources satisfying the first condition does not exist after the third OCC group is taken as the seventh OCC group, the seventh OCC group is taken as one of the one or more first OCC groups, and the NPUSCH corresponding to the third OCC group that is postponed to send is received in the seventh OCC group.

The adjusting the third OCC group includes the following operations. The network device postpones the third OCC group to the second resource position, and the postponed third OCC group as one of the one or more first OCC groups. The second resource is located after the first resource and the second resource does not satisfy the first condition.

The detailed description regarding the determination of the seventh OCC group by the network device and the related description regarding each processing method are similar to the processing performed by the first terminal described above, the difference is only that on the network device, the corresponding process is modified to one of canceling the reception, postponing the reception, or adjusting the reception, and thus will not be described in detail.

It should be understood that the processing manners adopted by the network device and each terminal should correspond to each other. For example, each terminal cancels the NPUSCH transmission in the third OCC group, and accordingly, the network device performs processing of canceling reception of the NPUSCH in the third OCC group. For example, each terminal postpones the NPUSCH transmission corresponding to the third OCC group, and accordingly, the network device performs processing of postponing reception of the NPUSCH corresponding to the third OCC group. For another example, each terminal adjusts the third OCC group, and accordingly, the network device performs a process of postponing the adjustment of the third OCC group. Which kind of processing the network device and each terminal perform may be specified in a protocol, default, or specified by the network device for each terminal, or the like, and as long as the processing manners adopted by the network device and each terminal correspond to each other, it is within the protection scope of the present embodiment.

In some possible implementations, the operation that the network device receives the NPUSCH to which the OCC is applied sent by at least one terminal in one or more first OCC groups includes one of the following. In a case that the fourth OCC group in which the NPUSCH collides with a reserved symbol exists in the one or more first OCC groups, the network device receives the NPUSCH to which the OCC(s) is/are applied sent by the at least one terminal in the fourth OCC group that is punctured based on the reserved symbol. In a case that the fourth OCC group in which the NPUSCH collides with an SRS exists in the one or more first OCC groups, the network device receives the NPUSCH to which the OCC(s) is/are applied sent by the at least one terminal in the fourth OCC group that is punctured based on the SRS. In a case that the fourth OCC group in which the NPUSCH collides with the reserved symbol exists in the one or more first OCC groups, the network device keeps receives the corresponding NPUSCH, to which the OCC(s) is/are applied, that is sent by the at least one terminal at the position of the reserved symbol in the fourth OCC group. In a case that the fourth OCC group in which the NPUSCH collides with the SRS in the one or more first OCC groups, the network device keeps receiving the corresponding NPUSCH to which the OCC(s) is/are applied sent by the at least one terminal at the position of the SRS in the fourth OCC group.

Here, the network device may perform process after completing the aforementioned obtaining one or more first OCC groups based on one or more second OCC groups. It should be noted that the network device performs the process of determining whether the fourth OCC group in which the NPUSCH collides with the reserved symbol exists in the one or more first OCC groups and/or determining whether the fourth OCC group in which the NPUSCH collides with the SRS exists in the one or more first OCC groups is the same as that the first terminal performs the process of determining whether the fourth OCC group in which the NPUSCH collides with the reserved symbol exists in the one or more first OCC groups and/or determining whether the fourth OCC group in which the NPUSCH collides with the SRS exists in the one or more first OCC groups, and the description thereof will not be repeated.

The network device receives the NPUSCH to which the OCC(s) is/are applied sent by the at least one terminal in the fourth OCC group that is punctured based on the reserved symbol, which may mean that the network device takes the position of the reserved symbol on the first OCC block of the fourth OCC group as the puncturing position on the first OCC block, determines a corresponding puncturing position on each other OCC block in the fourth OCC group except the first OCC block based on the puncturing position on the first OCC block in the fourth OCC group, performs puncturing on the NPUSCH transmission in the fourth OCC group based on the puncturing position on the first OCC block in the fourth OCC group and the puncturing position on each other OCC block, and receives the NPUSCH to which the OCC(s) is/are applied sent by the at least one terminal in the punctured fourth OCC group. The process of determining the corresponding puncturing position on each other OCC block in the fourth OCC group except the first OCC block based on the puncturing position on the first OCC block of the fourth OCC group is the same as that in the previous embodiment, and will not be described in detail.

The processing of the network device receiving the NPUSCH to which the OCC(s) is/are applied sent by the at least one terminal in the fourth OCC group that is punctured based on the SRS is similar to the processing of the network device receiving the NPUSCH to which the OCC(s) is/are applied sent by the at least one terminal in the fourth OCC group that is punctured based on the reserved symbol, and will not be repeated.

The network device keeps receiving the corresponding NPUSCH to which the OCC(s) is/are applied sent by the at least one terminal at the position of the reserved symbol in the fourth OCC group, which may mean that the network device keeps receiving the NPUSCH to which the OCC(s) is/are applied sent by the at least one terminal originally corresponding to the position of the reserved symbol in the fourth OCC group at the position of the reserved symbol, and does not receive other information sent by each terminal on the reserved symbol in the fourth OCC group.

The network device keeps receiving the corresponding NPUSCH to which the OCC(s) is/are applied sent by the at least one terminal at the position of the SRS in the fourth OCC group, which may mean that the network device keeps receiving the NPUSCH to which the OCC(s) is/are applied sent by the at least one terminal originally corresponding to the SRS position in the fourth OCC group at the SRS position, and does not receive the SRS sent by each terminal on the SRS position in the fourth OCC group.

In some possible implementations, the method further includes the following operation. The network device obtains an NPUSCH of each first OCC group corresponding to each terminal of the at least one terminal based on orthogonal sequence(s) corresponding to the at least one terminal and an NPUSCH to which OCC(s) is/are applied sent by at least one terminal received in each of the one or more first OCC groups.

The orthogonal sequence corresponding to the at least one terminal is determined from multiple candidate orthogonal sequences based on an index of the orthogonal sequence corresponding to each terminal of the at least one terminal. Specifically, the network device may determine an orthogonal sequence corresponding to each terminal from multiple candidate orthogonal sequences based on an index of the orthogonal sequence corresponding to the terminal.

Taking any one of the at least one terminal as the first terminal as an example, the network device obtains the NPUSCH of each of the first OCC groups corresponding to the at least one terminal based on the orthogonal sequence(s) corresponding to the at least one terminal and the NPUSCH to which the OCC(s) is/are applied sent by the at least one terminal received in each of the one or more first OCC groups, which may mean that the network device demodulates to obtain the NPUSCH of each of the first OCC groups corresponding to the first terminal by multiplying the first orthogonal sequence corresponding to the first terminal and the NPUSCH to which the OCC(s) is/are applied sent by the first terminal received in each of the one or more first OCC groups. Since the demodulation processing of each terminal by the network device is the same as that of the first terminal, the demodulation processing of each terminal will not be described in detail.

In some possible implementations, the method further includes the following operations. The network device descrambling the NPUSCH of each first OCC group corresponding to each terminal based on a scrambling sequence of the NPUSCH of each first OCC group corresponding to each terminal. The scrambling sequence of the NPUSCH of each first OCC group corresponding to each terminal is obtained by initializing based on the first frame index and/or the first slot index of each first OCC group.

Still taking the first terminal as an example, the manner in which the network device calculates the scrambling sequence of the NPUSCH of each first OCC group of the first terminal should be the same as the manner in which the first terminal calculates the scrambling sequence corresponding to each first OCC group, and thus will not be described in detail. Similarly, the manner in which the network device calculates the scrambling sequence of the NPUSCH of each first OCC group of each terminal should be similar to the manner in which the network device calculates the scrambling sequence of the NPUSCH of each first OCC group of the first terminal, and thus will not be described in detail.

In general, the related processing of the aforementioned network device receiving the NPUSCH to which the OCC(s) is/are applied may include the following processes: the network device obtains one or more second OCC groups by dividing based on the transmission resources occupied by the NPUSCH and the length of the orthogonal sequence, determines one or more first OCC groups for sending the NPUSCH based on the one or more second OCC groups, determining an orthogonal sequence corresponding to each terminal from multiple candidate orthogonal sequences based on an index of an orthogonal sequence corresponding to each terminal of the at least one terminal, demodulates to obtain the NPUSCH of each first OCC group corresponding to each of the at least one terminal based on the orthogonal sequence(s) corresponding to the at least one terminal and the NPUSCH to which OCC(s) is/are applied sent by at least one terminal received in each of the one or more first OCC groups, descrambles the NPUSCH of each first OCC group corresponding to each terminal based on the scrambling sequence of the NPUSCH of each first OCC group corresponding to each terminal, and obtains the descrambled NPUSCH of each terminal.

In some possible implementations, the method further includes the following operation. The network device receives, in one or more fifth OCC groups, DMRS(s) to which OCC(s) is/are applied sent by the at least one terminal. The one or more fifth OCC groups are at least part of the one or more first OCC groups, and the DMRS(s) to which OCC(s) is/are applied is/are carried by the NPUSCH which the OCC is/are applied.

On the network device side, the fifth OCC group may refer to an OCC group for receiving DMRS(s) to which the OCC(s) is/are applied. Each of the one or more fifth OCC groups includes one or more OCC blocks, and different OCC blocks of the one or more OCC blocks correspond to different time domain ranges and/or different frequency domain ranges.

In one embodiment, the method further includes one of following. In the case that the sixth OCC group in which DMRS(s) collide(s) with a reserved symbol exists in the one or more first OCC groups, the network device does not receive DMRS(s) in the sixth OCC group and does not take the sixth OCC group as one of the one or more fifth OCC groups. In the case that the sixth OCC group in which DMRS(s) collide(s) with a reserved symbol exists in the one or more first OCC groups, the network device determines that the sixth OCC group is one of the one or more fifth OCC groups.

The specific processing manner of the network device determining whether the sixth OCC group in which the DMRS(s) collide(s) with the reserved symbol exists in the one or more first OCC groups is the same as the specific processing manner of the first terminal determining whether the sixth OCC group in which the DMRS(s) collide(s) with the reserved symbol exists in the one or more first OCC groups, and will not be described in detail.

The network device does not receive DMRS(s) in the sixth OCC group and does not take the sixth OCC group as one of the one or more fifth OCC groups may be: the first terminal does not take the sixth OCC group as one of the one or more fifth OCC groups, and if the DMRS(s) collide(s) with the reserved symbol at the first relative position of the second OCC block in the sixth OCC group, the network device determines that the DMRS(s) is not received at the first relative position of the second OCC block in the sixth OCC group and that the DMRS(s) is also not received at the first relative position of the other OCC blocks in the sixth OCC group except the second OCC block.

The network device determines that the sixth OCC group is taken as one of the one or more fifth OCC groups, which may be that the network device takes the sixth OCC group as one of the one or more fifth OCC groups, and keeps receiving DMRS(s) to which the OCC(s) is/are applied sent by at least one terminal at a position that collides with the reserved symbol in the sixth OCC group. Here, keeping receiving the DMRS(s) to which the OCC(s) is/are applied sent by the at least one terminal at the position that collides with the reserved symbol in the sixth OCC group may mean that the network device keeps receiving the DMRS(s) to which the OCC(s) is/are applied sent by the at least one terminal at the position that collides with the reserved symbol in the sixth OCC group and does not receive other information transmitted on the reserved symbol in the sixth OCC group.

In some possible examples, the processing manner of the network device may further include: the network device determines whether the DMRS(s) in the one or more first OCC groups collides with the resource included in the second condition, and if so, the first OCC group in which the DMRS(s) collide(s) with the resource included in the second condition is taken as the tenth OCC group. The first terminal performs one of: canceling reception of the NPUSCH and the DMRS(s) in the tenth OCC group, postponing reception of the NPUSCH and the DMRS(s) corresponding to the tenth OCC group, or adjusting the tenth OCC group. The second condition may further include that the DMRS collides with at least one of following: an NPRACH resource, an inserted gap, a reserved uplink subframe, or a downlink reception. The resource included in the second condition is at least one of an NPRACH resource, an inserted gap, a reserved uplink subframe, or a downlink reception.

In this example, the description of cancelling the reception of the NPUSCH and the DMRS(s), postponing the reception of the NPUSCH and the DMRS(s) corresponding to the tenth OCC group, and adjusting the tenth OCC group in the tenth OCC group is similar to the description of cancelling the reception of the NPUSCH, postponing the reception of the NPUSCH corresponding to the third OCC group, and adjusting the third OCC group in the foregoing embodiment, the difference is only that the DMRS(s) corresponding to the tenth OCC group is also processed in the same manner in this example, and the description will not be repeated here.

In one embodiment, the method further includes the following operation. The network device demodulates DMRS(s) sent by each terminal received in each fifth OCC group based on an orthogonal sequence corresponding to the at least one terminal and a DMRS sequence value corresponding to each OCC block in each of the one or more fifth OCC groups. The same terminal corresponds to the same DMRS sequence value for different OCC blocks in the same fifth OCC group.

Taking the first terminal as an example, the network device demodulates the DMRS(s) sent by each terminal received in each fifth OCC group based on an orthogonal sequence(s) corresponding to the at least one terminal and a DMRS sequence value corresponding to each OCC block in each of the one or more fifth OCC groups, which may include: the network device demodulates the DMRS(s) sent by the first terminal received in each fifth OCC group by multiplying the first orthogonal sequence corresponding to the first terminal and the DMRS sequence value corresponding to each OCC block in each of the one or more fifth OCC groups.

Alternatively, the network device demodulates the DMRS(s) sent by the first terminal received in each fifth OCC group by multiplying the first orthogonal sequence corresponding to the first terminal and the DMRS sequence value corresponding to each OCC block in each of the one or more fifth OCC groups, which may: the network device determines the DMRS sequence cyclic shift value corresponding to the index of the first orthogonal sequence corresponding to the first terminal, and calculates the DMRS sequence value corresponding to the first terminal on each OCC block in each fifth OCC group based on the DMRS sequence cyclic shift value, and the DMRS sequence value on each OCC block in each fifth OCC group is multiplied by the corresponding first orthogonal sequence, and the DMRS of the first terminal is obtained by demodulation. The processing of calculating the DMRS sequence value corresponding to each OCC block in each fifth OCC group of the first terminal based on the DMRS sequence cyclic shift value is the same as the related description of the first terminal in the previous embodiment, and will not be described in detail.

Since the demodulation manner of the network device for the DMRS(s) sent by to each terminal is the same as that for the first terminal, details will not be described.

In one embodiment, the sequence group indexes of the DMRS(s) corresponding to different OCC blocks in the same fifth OCC group for the same terminal are the same.

This embodiment is particularly suitable for DMRS(s) using sequence group frequency hopping.

Specifically, taking the first terminal as an example, a manner in which the network device determines the sequence group index of the DMRS corresponding to each OCC block in each fifth OCC group for the first terminal may include determining the sequence group frequency hopping corresponding to each fifth OCC group based on the first slot index in each fifth OCC group, and determining the sequence group index of the DMRS corresponding to each OCC block in each fifth OCC group for the first terminal based on the sequence group frequency hopping pattern corresponding to each fifth OCC group. The calculation manner for specifically determining the sequence group index of the DMRS corresponding to each OCC block in each fifth OCC group for the first terminal is the same as that of the previous embodiment, and will not be repeated here. The manner in which the network device determines the sequence group index of the DMRS corresponding to each OCC block in each fifth OCC group for each terminal is similar to that for the first terminal and will not be described in detail.

Combined with related technologies, in NTN system, the coverage range of satellite beams is large, which leads to the number of access users of cells being obviously higher than that of Terrestrial cells. Therefore, how to improve the system capacity becomes a problem that needs to be solved.

According to the solutions provided by the embodiments of the present disclosure, the first terminal can transmit the NPUSCH to which the OCC is applied in one or more OCC groups, so that the transmission of the NPUSCH by using the OCC can realize code division multiplexing on time-frequency resources, thereby improving the system capacity.

In the solutions provided by the present embodiment, since the network device can receive the NPUSCH to which the OCC is applied sent by the terminal(s) in one or more OCC groups, and different terminals use different orthogonal sequences to generate the NPUSCH to which the OCC is applied, so that different users can perform code division multiplexing on the same time-frequency resources, so as to improve the system capacity.

In addition, the first terminal may adjust the NPUSCH transmission in the OCC group that satisfies the first condition, thereby ensuring that the network device can combine and receive the NPUSCH on different OCC blocks in the OCC group(s). Furthermore, based on the solutions provided in the present embodiment, it is caused that the first terminal sends the DMRS(s) to which the OCC is applied in each fifth OCC group, thereby ensuring orthogonality between the DMRSs sent in the OCC group, so that the network side can perform channel estimation on the terminal performing resource multiplexing in the OCC group. In addition, the first terminal can adjust the DMRS transmission in the fifth OCC group satisfying the second condition, thereby ensuring that the network device can merge and receive the DMRSs on different OCC blocks in the OCC group.

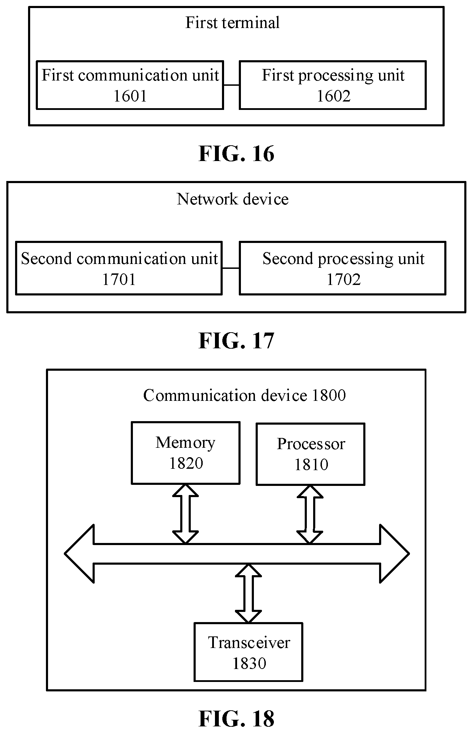

FIG. 16 is a schematic structure diagram of the first terminal according to an embodiment of the present disclosure. The first terminal includes the first communication unit 1601.

The first communication unit 1601 is configured to send, in one or more first OCC groups, a NPUSCH to which an OCC is applied.

The one or more first OCC groups are determined based on one or more second OCC groups, and the one or more second OCC groups are determined based on transmission resources occupied by the NPUSCH and/or a length of an orthogonal sequence.

As shown in FIG. 16, the first terminal further includes the first processing unit 1602.

The first processing unit 1602 is configured to adjust the third OCC group in a case that the first resource satisfying the first condition exists in the third OCC group of the one or more second OCC groups.

The first communication unit is configured to, in the case that the first resource satisfying the first condition exists in the third OCC group of the one or more second OCC groups, perform one of following: cancelling NPUSCH transmission in the third OCC group, or postponing the NPUSCH transmission corresponding to the third OCC group.

The first processing unit is configured to postpone the third OCC group to a position of the second resource, and take a postponed third OCC group as one of the one or more first OCC groups. The second resource is located after the first resource and the second resource does not satisfy the first condition.

The first condition includes that the NPUSCH collides with at least one of following: a NPRACH resource, an inserted gap, a reserved uplink subframe, a downlink reception, a reserved symbol, or a SRS.

The first communication unit is configured to perform one of following: in a case that the fourth OCC group in which the NPUSCH collides with a reserved symbol exists in the one or more first OCC groups, perform, based on the reserved symbol, punctured transmission on a NPUSCH, to which the OCC is applied, in the fourth OCC group; in a case that a fourth OCC group in which the NPUSCH collides with an SRS exists in the one or more first OCC groups, performing, based on the SRS, punctured transmission on a NPUSCH, to which the OCC is applied, in the fourth OCC group; in the case that the fourth OCC group in which the NPUSCH collides with the reserved symbol exists in the one or more first OCC groups, keep, at a position of the reserved symbol in the fourth OCC group, sending the corresponding NPUSCH to which the OCC is applied; or in the case that the fourth OCC group in which the NPUSCH collides with the SRS exists in the one or more first OCC groups, keep, at a position of the SRS in the fourth OCC group, sending the corresponding NPUSCH to which the OCC is applied.

The transmission resources occupied by the NPUSCH are related to a number of repetitions of the NPUSCH, and the number of the repetitions of the NPUSCH is determined based on at least one of following: a number of repetitions of the NPUSCH configured by a network device, a maximum TBS configured by a higher layer when the first terminal performs EDT, a TBS corresponding to NPUSCH transmission, or the length of the orthogonal sequence.

A NPUSCH, to which the OCC is applied, that is sent in different first OCC groups of the one or more first OCC groups, is obtained by calculating based on a first orthogonal sequence and the NPUSCH corresponding to the different first OCC group.

A scrambling sequence corresponding to an NPUSCH, to which the OCC is applied, that is sent in each of the one or more first OCC groups is obtained by initialing based on a first frame index and/or a first slot index of each first OCC group.

The first communication unit is configured to send, in one or more fifth OCC groups, DMRS(s) to which the OCC is applied. The one or more fifth OCC groups are at least part of the one or more first OCC groups, and the DMRS(s) to which the OCC is applied is/are carried by the NPUSCH to which the OCC is applied.

The first processing unit is configured to perform one of following: in a case that the sixth OCC group in which the DMRS(s) collide(s) with a reserved symbol exists in the one or more first OCC groups, not taking the sixth OCC group as one of the one or more fifth OCC groups; or in a case that the sixth OCC group in which the DMRS(s) collide(s) with the reserved symbol exists in the one or more first OCC groups, taking, the sixth OCC group as one of the one or more fifth OCC groups.

Each of the one or more fifth OCC groups includes one or more OCC blocks, and different OCC blocks of the one or more OCC blocks correspond to different time domain ranges and/or different frequency domain ranges.

DMRS(s), to which the OCC is applied, that is sent in each of the one or more fifth OCC groups, is/are obtained by calculating based on the first orthogonal sequence and a DMRS sequence value corresponding to each OCC block in each fifth OCC group, and different OCC blocks in a same fifth OCC group correspond to a same DMRS sequence value.

DMRSs, to which the OCC is applied, that are sent by different OCC blocks in a same fifth OCC group in the one or more fifth OCC groups, correspond to a same sequence group index.

The first orthogonal sequence is determined from multiple candidate orthogonal sequences based on an index of the first orthogonal sequence corresponding to the first terminal.

FIG. 17 is a schematic structure diagram of a network device according to an embodiment of the present disclosure. The network device includes the second communication unit 1701.

The second communication unit 1701 is configured to receive, in one or more first OCC groups, a NPUSCH, to which OCC(s) is/are applied, that is sent by at least one terminal.

The one or more first OCC groups are determined based on one or more second OCC groups. The one or more second OCC groups are determined based on transmission resources occupied by the NPUSCH and/or lengths of orthogonal sequences.

As illustrated in FIG. 17, the network device further includes the second processing unit 1702.

The second processing unit 1702 is configured to, in a case that the first resource satisfying the first condition exists in the third OCC group of the one or more second OCC groups, adjust the third OCC group.

The second communication unit is configured to, in a case that the first resource satisfying the first condition exists in the third OCC group of the one or more second OCC groups, perform one of following: canceling reception of the NPUSCH in the third OCC group, postponing reception of the NPUSCH corresponding to the third OCC group.

The second processing unit is configured to postpone the third OCC group to a position of the second resource, and take a postponed third OCC group as one of the one or more first OCC groups. The second resource is located after the first resource and the second resource does not satisfy the first condition.

The first condition includes that the NPUSCH collides with at least one of following: a NPRACH resource, an inserted gap, a reserved uplink subframe, a downlink reception, a reserved symbol, or a SRS.

The second communication unit is configured to perform one of following: in a case that the fourth OCC group in which the NPUSCH collides with a reserved symbol exists in the one or more first OCC groups, receive, in the fourth OCC group that is punctured based on the reserved symbol, the NPUSCH, to which the OCC(s) is/are applied, that is sent by the at least one terminal; in a case that a fourth OCC group in which the NPUSCH collides with an SRS exists in the one or more first OCC groups, receive, in the fourth OCC group that is punctured based on the SRS, the NPUSCH, to which the OCC(s) is/are applied, that is sent by the at least one terminal; in the case that the fourth OCC group in which the NPUSCH collides with the reserved symbol exists in the one or more first OCC groups, keep, at a position of the reserved symbol in the fourth OCC group, receiving the corresponding NPUSCH, to which the OCC(s) is/are applied, that is sent by the at least one terminal; or in the case that the fourth OCC group in which the NPUSCH collides with the SRS exists in the one or more first OCC groups, keep, at a position of the SRS in the fourth OCC group, receiving the corresponding NPUSCH, to which the OCC(s) is/are applied, that is sent by the at least one terminal.

The transmission resources occupied by the NPUSCH are related to a number of repetitions of the NPUSCH, and the number of the repetitions of the NPUSCH is determined based on at least one of following: a number of repetitions of the NPUSCH configured by a network device, a maximum TBS configured by a higher layer when EDT is performed, a TBS corresponding to NPUSCH transmission, or the length of the orthogonal sequence.

The second processing unit is configured to obtain a NPUSCH of each first OCC group corresponding to each terminal of the at least one terminal based on orthogonal sequence(s) corresponding to the at least one terminal and the NPUSCH, to which the OCC(s) is/are applied, that is sent by the at least one terminal, that is received in each of the one or more first OCC groups.

The second processing unit is configured to descramble, based on a scrambling sequence of a NPUSCH of each first OCC group corresponding to each terminal, the NPUSCH of each first OCC group corresponding to each terminal. The scrambling sequence of the NPUSCH of each first OCC group corresponding to each terminal is obtained by initializing based on the first frame index and/or the first slot index of each first OCC group.

The second communication unit is configured to receive, in one or more fifth OCC groups, DMRS(s), to which the OCC(s) is/are applied, that is/are sent by the at least one terminal. The one or more fifth OCC groups are at least part of the one or more first OCC groups, and the DMRS(s) to which the OCC(s) is/are applied is/are carried by the NPUSCH to which the OCC(s) is/are applied.

The second processing unit is configured to perform one of following: in a case that a sixth OCC group in which the DMRS(s) collide(s) with a reserved symbol exists in the one or more first OCC groups, not receiving, the DMRS(s) in the sixth OCC group and not taking the sixth OCC group as one of the one or more fifth OCC groups; or in a case that the sixth OCC group in which the DMRS(s) collide(s) with the reserved symbol exists in the one or more first OCC groups, taking the sixth OCC group as one of the one or more fifth OCC groups.

Each of the one or more fifth OCC groups includes one or more OCC blocks, and different OCC blocks of the one or more OCC blocks correspond to different time domain ranges and/or different frequency domain ranges.

The second processing unit is configured to demodulate, based on orthogonal sequence(s) corresponding to the at least one terminal and a DMRS sequence value corresponding to each OCC block in each fifth OCC group in the one or more fifth OCC groups, DMRS(s), that is/are sent by each terminal, that is/are received in each fifth OCC group. The same terminal corresponds to the same DMRS sequence value for different OCC blocks in the same fifth OCC group.

Sequence group indexes of DMRSs corresponding to different OCC blocks in a same fifth OCC group of a same terminal are the same.

Orthogonal sequence(s) corresponding to the at least one terminal is/are determined from a plurality of candidate orthogonal sequences based on an index of the orthogonal sequence corresponding to each of the at least one terminal.

The devices according to the embodiments of the present disclosure can realize the corresponding functions of each device in the aforementioned authentication method embodiment. The corresponding flow, function, implementation mode and beneficial effect of each module (sub-module, unit or component, etc.) in the first terminal or network device can be referred to the corresponding description in the above method embodiment, and will not be described again here. It should be noted that the functions described for each module (sub-module, unit, component, or the like) in the first terminal or the network device of the embodiments of present disclosure may be realized by different modules (sub-module, unit, component, or the like), or may be realized by the same module (sub-module, unit, component, or the like).

FIG. 18 is a schematic structural diagram of a communication device 1800 according to an embodiment of the present disclosure. The communication device 1800 includes a processor 1810 that can invoke and execute a computer program from a memory to cause the communication device 1800 to implement the method in the embodiment of the present disclosure. In one possible implementation, the communication device 1800 may further include a memory 1820. Here, the processor 1810 may invoke and execute a computer program from the memory 1820 to cause the communication device 1800 to implement the method in the embodiment of the present disclosure. The memory 1820 may be a separate device independent of the processor 1810, or may be integrated in the processor 1810. In one possible implementation, the communication device 1800 may further include a transceiver 1830, which the processor 1810 may control to communicate with other devices, specifically, may transmit information or data to or receive information or data sent by other devices. The transceiver 1830 may include a transmitter and a receiver. The transceiver 1830 may further include one or more antennas.

In one possible implementation, the communication device 1800 may be the first terminal or a network device according to the embodiment of the present disclosure, and the communication device 1800 may implement corresponding processes implemented by the first terminal or a network device in each method of the embodiment of the present disclosure, which will not be described again here for simplicity.

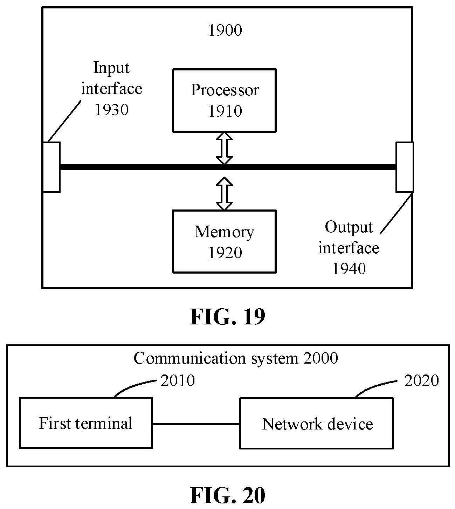

FIG. 19 is a schematic structural diagram of a chip 1900 according to an embodiment of the present disclosure. The chip 1900 includes a processor 1910 that can invoke and execute a computer program from a memory to implement the method in an embodiment of the present disclosure. In one possible implementation, the chip 1900 may also include a memory 1920. Here, the processor 1910 may invoke and execute a computer program from the memory 1920 to implement the method performed by the first terminal or the network device in the embodiment of the present disclosure. The memory 1920 may be a separate device independent of the processor 1910, or may be integrated in the processor 1910. In one possible implementation, the chip 1900 may further include an input interface 1930. Here, the processor 1910 may control the input interface 1930 to communicate with other devices or chips, and specifically, may acquire information or data transmitted by other devices or chips. In one possible implementation, the chip 1900 may further include an output interface 1940. Here, the processor 1910 may control the output interface 1940 to communicate with other devices or chips, and specifically, may output information or data to other devices or chips.

In one possible implementation, the chip may be applied to the first terminal or network device in the embodiment of the present disclosure, and the chip can realize the corresponding flow implemented by the first terminal or network device in each method of the embodiment of the present disclosure, which will not be described again here for simplicity. It should be understood that the chip mentioned in the embodiment of the present disclosure may also be referred to as a system-level chip, a system chip, a chip system, a system-on-chip chip, or the like. The processors mentioned above may be general purpose processors, digital signal processors (DSP), field programmable gate arrays (FPGAs), application specific integrated circuits (ASICs) or other programmable logic devices, transistor logic devices, discrete hardware components, and the like. Here, the general-purpose processor mentioned above may be a microprocessor, any conventional processor, or the like. The memory mentioned above may be a volatile memory or a non-volatile memory, or may include both volatile and non-volatile memories. The non-volatile memory may be a read-only memory (ROM), a programmable read-only memory (PROM), an erasable programmable read-only memory (EPROM), an electrically erasable programmable read-only memory (EPROM), or a flash memory. The volatile memory may be a random access memory (RAM). It should be understood that the above-described memory is exemplary but not limiting, and for example, the memory in the embodiment of the present disclosure may also be a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchronous link dynamic random access memory (SLDRAM), a Direct Rambus RAM (DR RAM), and the like. That is, the memory in embodiments of the present disclosure is intended to include, but is not limited to, these and any other suitable types of memory.

FIG. 20 is a schematic block diagram of a communication system 2000 according to an embodiment of the present disclosure. The communication system 2000 includes the first terminal 2010 and a network device 2020. Here, the first terminal 2010 may be used to implement corresponding functions implemented by the terminal in the above-described method. The network device 2020 may be used to implement the corresponding functions implemented by the core network elements in the above-described method. For the sake of brevity, details will not be described here.

In the above-described embodiments, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, a flow or function according to an embodiment of the present disclosure is generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server, or data center to another website site, computer, server, or data center via wired (e.g., coaxial cable, fiber optic, Digital Subscriber Line (DSL)) or wireless (e.g., infrared, wireless, microwave, etc.). The computer-readable storage medium may be any available medium accessible by a computer or a data storage device such as a server, data center, or the like incorporating one or more of the available media integrations. The available medium may be a magnetic medium (e.g., a floppy Disk, a hard Disk, a magnetic tape), an optical medium (e.g., a DVD), or a semiconductor medium (e.g., a Solid State Disk (SSD)), or the like.

It should be understood that in various embodiments of the present disclosure, the size of the sequence numbers of the above-described processes does not mean the order of the execution order, and the execution order of each process should be determined by its function and inherent logic, and should not constitute any limitation on the implementation process of the embodiments of the present disclosure. Those skilled in the art can clearly understand that for convenience and simplicity of the description, the specific working processes of the above-described systems, devices, and units can be referred to the corresponding processes in the above-described method embodiments, and will not be described again here. The above are only specific embodiments of the present disclosure, but the protection scope of the present disclosure is not limited thereto, and any person familiar with the technical field can easily think of changes or substitutions within the technical scope disclosed in the present disclosure, and all of them should be covered by the protection scope of the present disclosure. Therefore, the scope of protection of the present disclosure should be determined by the scope of protection of the claim.

## Claims

1. A communication method, comprising:
sending, by a first terminal, in one or more first Orthogonal Cover Code (OCC) groups, a Narrow-band Physical Uplink Shared Channel (NPUSCH) to which an OCC is applied.

2. The method of claim 1, wherein the one or more first OCC groups are determined based on one or more second OCC groups, and the one or more second OCC groups are determined based on transmission resources occupied by the NPUSCH and/or a length of an orthogonal sequence.

3. The method of claim 2, further comprising:
in a case that a first resource satisfying a first condition exists in a third OCC group of the one or more second OCC groups, performing, by the first terminal, one of following: canceling NPUSCH transmission in the third OCC group, postponing the NPUSCH transmission corresponding to the third OCC group, or adjusting the third OCC group.

4. The method of claim 3, wherein adjusting the third OCC group comprises:
postponing, by the first terminal, the third OCC group to a position of a second resource, and taking a postponed third OCC group as one of the one or more first OCC groups, wherein the second resource is located after the first resource and the second resource does not satisfy the first condition.

5. The method of claim 3 or 4, wherein the first condition comprises that the NPUSCH collides with at least one of following: a Narrow-band Physical Random Access Channel (NPRACH) resource, an inserted gap, a reserved uplink subframe, a downlink reception, a reserved symbol, or a Sounding Reference Signal (SRS).

6. The method of claim 1 or 2, wherein sending, by the first terminal, in the one or more first OCC groups, the NPUSCH to which the OCC is applied comprises one of following:
in a case that a fourth OCC group in which the NPUSCH collides with a reserved symbol exists in the one or more first OCC groups, performing, by the first terminal based on the reserved symbol, punctured transmission on a NPUSCH, to which the OCC is applied, in the fourth OCC group;
in a case that a fourth OCC group in which the NPUSCH collides with an SRS exists in the one or more first OCC groups, performing, by the first terminal based on the SRS, punctured transmission on a NPUSCH, to which the OCC is applied, in the fourth OCC group;
in the case that the fourth OCC group in which the NPUSCH collides with the reserved symbol exists in the one or more first OCC groups, keeping, by the first terminal, at a position of the reserved symbol in the fourth OCC group, sending the corresponding NPUSCH to which the OCC is applied; or
in the case that the fourth OCC group in which the NPUSCH collides with the SRS exists in the one or more first OCC groups, keeping, by the first terminal, at a position of the SRS in the fourth OCC group, sending the corresponding NPUSCH to which the OCC is applied.

7. The method of any one of claims 2 to 5, wherein the transmission resources occupied by the NPUSCH are related to a number of repetitions of the NPUSCH, and the number of the repetitions of the NPUSCH is determined based on at least one of following: a number of repetitions of the NPUSCH configured by a network device, a maximum Transport Block Size (TBS) configured by a higher layer when the first terminal performs early data transmission (EDT), a TBS corresponding to NPUSCH transmission, or the length of the orthogonal sequence.

8. The method of any one of claims 1 to 7, wherein a NPUSCH, to which the OCC is applied, that is sent in different first OCC groups of the one or more first OCC groups, are obtained by calculating based on a first orthogonal sequence and the NPUSCH corresponding to the different first OCC group.

9. The method of any one of claims 1 to 8, wherein a scrambling sequence corresponding to an NPUSCH, to which the OCC is applied, that is sent in each of the one or more first OCC groups is obtained by initialing based on a first frame index and/or a first slot index of each first OCC group.

10. The method of any one of claims 1 to 9, further comprising:
sending, by the first terminal, in one or more fifth OCC groups, Demodulation Reference Signal(s) (DMRS(s)) to which the OCC is applied, wherein the one or more fifth OCC groups are at least part of the one or more first OCC groups, and the DMRS(s) to which the OCC is applied is/are carried by the NPUSCH to which the OCC is applied.

11. The method of claim 10, further comprising one of following:
in a case that a sixth OCC group in which the DMRS(s) collide(s) with a reserved symbol exists in the one or more first OCC groups, not taking, by the first terminal, the sixth OCC group as one of the one or more fifth OCC groups; or
in a case that the sixth OCC group in which the DMRS(s) collide(s) with the reserved symbol exists in the one or more first OCC groups, taking, by the first terminal, the sixth OCC group as one of the one or more fifth OCC groups.

12. The method of claim 10 or 11, wherein each of the one or more fifth OCC groups comprises one or more OCC blocks, and different OCC blocks of the one or more OCC blocks correspond to different time domain ranges and/or different frequency domain ranges.

13. The method of claim 12, wherein DMRS(s), to which the OCC is applied, that is/are sent in each of the one or more fifth OCC groups, is/are obtained by calculating based on a first orthogonal sequence and a DMRS sequence value corresponding to each OCC block in each fifth OCC group, and different OCC blocks in a same fifth OCC group correspond to a same DMRS sequence value.

14. The method of claim 12 or 13, wherein DMRSs, to which the OCC is applied, that are sent by different OCC blocks in a same fifth OCC group in the one or more fifth OCC groups, correspond to a same sequence group index.

15. The method of any one of claims 8 or 13, wherein the first orthogonal sequence is determined from a plurality of candidate orthogonal sequences based on an index of the first orthogonal sequence corresponding to the first terminal.

16. A communication method, comprising:
receiving, by a network device, in one or more first Orthogonal Cover Code (OCC) groups, a Narrow-band Physical Uplink Shared Channel (NPUSCH), to which OCC(s) is/are applied, that is sent by at least one terminal.

17. The method of claim 16, wherein the one or more first OCC groups are determined based on one or more second OCC groups, wherein the one or more second OCC groups are determined based on transmission resources occupied by the NPUSCH and/or lengths of orthogonal sequences.

18. The method of claim 17, further comprising:
in a case that a first resource satisfying a first condition exists in a third OCC group of the one or more second OCC groups, performing, by the network device, one of following: canceling reception of the NPUSCH in the third OCC group, postponing reception of the NPUSCH corresponding to the third OCC group, or adjusting the third OCC group.

19. The method of claim 18, wherein adjusting the third OCC group comprises:
postponing, by the network device, the third OCC group to a position of a second resource, and taking a postponedthird OCC group as one of the one or more first OCC groups, wherein the second resource is located after the first resource and the second resource does not satisfy the first condition.

20. The method of claim 18 or 19, wherein the first condition comprises that the NPUSCH collides with at least one of following: a Narrow-band Physical Random Access Channel (NPRACH) resource, an inserted gap, a reserved uplink subframe, a downlink reception, a reserved symbol, or a Sounding Reference Signal (SRS).

21. The method of claim 16 or 17, wherein receiving, by the network device, in the one or more first OCC groups, the NPUSCH, to which the OCC(s) is/are applied, that is sent by the at least one terminal comprises one of following:
in a case that a fourth OCC group in which the NPUSCH collides with a reserved symbol exists in the one or more first OCC groups, receiving, by the network device, in the fourth OCC group that is punctured based on the reserved symbol, the NPUSCH, to which the OCC(s) is/are applied, that is sent by the at least one terminal;
in a case that a fourth OCC group in which the NPUSCH collides with an SRS exists in the one or more first OCC groups, receiving, by the network device, in the fourth OCC group that is punctured based on the SRS, the NPUSCH, to which the OCC(s) is/are applied, that is sent by the at least one terminal;
in the case that the fourth OCC group in which the NPUSCH collides with the reserved symbol exists in the one or more first OCC groups, keeping, by the network device, at a position of the reserved symbol in the fourth OCC group, receiving the corresponding NPUSCH, to which the OCC(s) is/are applied, that is sent by the at least one terminal; or
in the case that the fourth OCC group in which the NPUSCH collides with the SRS exists in the one or more first OCC groups, keeping, by the network device, at a position of the SRS in the fourth OCC group, receiving the corresponding NPUSCH, to which the OCC(s) is/are applied, that is sent by the at least one terminal.

22. The method of any one of claims 17 to 20, wherein the transmission resources occupied by the NPUSCH are related to a number of repetitions of the NPUSCH, and the number of the repetitions of the NPUSCH is determined based on at least one of following: a number of repetitions of the NPUSCH configured by a network device, a maximum Transport Block Size (TBS) configured by a higher layer when early data transmission (EDT) is performed, a TBS corresponding to NPUSCH transmission, or the length of the orthogonal sequence.

23. The method of any one of claims 16 to 22, wherein further comprising:
obtaining, by the network device, a NPUSCH of each first OCC group corresponding to each terminal of the at least one terminal based on orthogonal sequence(s) corresponding to the at least one terminal and the NPUSCH, to which the OCC(s) is/are applied, that is sent by the at least one terminal, that is received in each of the one or more first OCC groups.

24. The method of claim 23, further comprising:
descrambling, by the network device based on a scrambling sequence of a NPUSCH of each first OCC group corresponding to each terminal, the NPUSCH of each first OCC group corresponding to each terminal, wherein the scrambling sequence of the NPUSCH of each first OCC group corresponding to each terminal is obtained by initializing based on a first frame index and/or a first slot index of each first OCC group.

25. The method of any one of claims 16 to 24, further comprising:
receiving, by the network device, in one or more fifth OCC groups, Demodulation Reference Signal(s) (DMRS(s)), to which the OCC(s) is/are applied, that is/are sent by the at least one terminal, wherein the one or more fifth OCC groups are at least part of the one or more first OCC groups, and the DMRS(s) to which the OCC(s) is/are applied is/are carried by the NPUSCH to which the OCC(s) is/are applied.

26. The method of claim 25, further comprising one of following:
in a case that a sixth OCC group in which the DMRS(s) collide(s) with a reserved symbol exists in the one or more first OCC groups, not receiving, by the network device, the DMRS(s) in the sixth OCC group and not taking the sixth OCC group as one of the one or more fifth OCC groups; or
in a case that the sixth OCC group in which the DMRS(s) collide(s) with the reserved symbol exists in the one or more first OCC groups, taking, by the network device, the sixth OCC group as one of the one or more fifth OCC groups.

27. The method of claim 25 or 26, wherein each of the one or more fifth OCC groups comprises one or more OCC blocks, and different OCC blocks of the one or more OCC blocks correspond to different time domain ranges and/or different frequency domain ranges.

28. The method of claim 27, further comprising:
demodulating, by the network device based on orthogonal sequence(s) corresponding to the at least one terminal and a DMRS sequence value corresponding to each OCC block in each fifth OCC group in the one or more fifth OCC groups, DMRS(s), that is/are sent by each terminal, that is/are received in each fifth OCC group, wherein the same terminal corresponds to the same DMRS sequence value for different OCC blocks in the same fifth OCC group.

29. The method of claim 27 or 28, wherein sequence group indexes of DMRSs corresponding to different OCC blocks in a same fifth OCC group of a same terminal are the same.

30. The method of claim 23 or 28, wherein orthogonal sequence(s) corresponding to the at least one terminal is/are determined from a plurality of candidate orthogonal sequences based on an index of the orthogonal sequence corresponding to each of the at least one terminal.

31. A first terminal, comprising:
a first communication unit, configured to send, in one or more first Orthogonal Cover Code (OCC) groups, a Narrow-band Physical Uplink Shared Channel (NPUSCH) to which an OCC is applied.

32. The first terminal of claim 31, wherein the one or more first OCC groups are determined based on one or more second OCC groups, and the one or more second OCC groups are determined based on transmission resources occupied by the NPUSCH and/or a length of an orthogonal sequence.

33. The first terminal of claim 32, wherein the first terminal further comprises:
a first processing unit, configured to adjust a third OCC group in a case that a first resource satisfying a first condition exists in the third OCC group of the one or more second OCC groups; or
wherein the first communication unit is configured to, in the case that the first resource satisfying the first condition exists in the third OCC group of the one or more second OCC groups, perform one of following: cancelling NPUSCH transmission in the third OCC group, or postponing the NPUSCH transmission corresponding to the third OCC group.

34. The first terminal of claim 33, wherein the first processing unit is configured to postpone the third OCC group to a position of a second resource, and take a postponed third OCC group as one of the one or more first OCC groups, wherein the second resource is located after the first resource and the second resource does not satisfy the first condition.

35. The first terminal of claim 33 or 34, wherein the first condition comprises that the NPUSCH collides with at least one of following: a Narrow-band Physical Random Access Channel (NPRACH) resource, an inserted gap, a reserved uplink subframe, a downlink reception, a reserved symbol, or a Sounding Reference Signal (SRS).

36. The first terminal of claim 31 or 32, wherein the first communication unit is configured to perform one of following:
in a case that a fourth OCC group in which the NPUSCH collides with a reserved symbol exists in the one or more first OCC groups, perform, based on the reserved symbol, punctured transmission on a NPUSCH, to which the OCC is applied, in the fourth OCC group;
in a case that a fourth OCC group in which the NPUSCH collides with an SRS exists in the one or more first OCC groups, performing, based on the SRS, punctured transmission on a NPUSCH, to which the OCC is applied, in the fourth OCC group;
in the case that the fourth OCC group in which the NPUSCH collides with the reserved symbol exists in the one or more first OCC groups, keep, at a position of the reserved symbol in the fourth OCC group, sending the corresponding NPUSCH to which the OCC is applied; or
in the case that the fourth OCC group in which the NPUSCH collides with the SRS exists in the one or more first OCC groups, keep, at a position of the SRS in the fourth OCC group, sending the corresponding NPUSCH to which the OCC is applied.

37. The first terminal of any one of claims 32 to 35, wherein the transmission resources occupied by the NPUSCH are related to a number of repetitions of the NPUSCH, and the number of the repetitions of the NPUSCH is determined based on at least one of following: a number of repetitions of the NPUSCH configured by a network device, a maximum Transport Block Size (TBS) configured by a higher layer when the first terminal performs early data transmission (EDT), a TBS corresponding to NPUSCH transmission, or the length of the orthogonal sequence.

38. The first terminal of any one of claims 31 to 37, wherein a NPUSCH, to which the OCC is applied, that is sent in different first OCC groups of the one or more first OCC groups, is obtained by calculating based on a first orthogonal sequence and the NPUSCH corresponding to the different first OCC group.

39. The first terminal of any one of claims 31 to 38, wherein a scrambling sequence corresponding to an NPUSCH, to which the OCC is applied, that is sent in each of the one or more first OCC groups is obtained by initialing based on a first frame index and/or a first slot index of each first OCC group.

40. The first terminal of any one of claims 31 to 39, wherein the first communication unit is configured to send, in one or more fifth OCC groups, Demodulation Reference Signal(s) (DMRS(s)) to which the OCC is applied, wherein the one or more fifth OCC groups are at least part of the one or more first OCC groups, and the DMRS(s) to which the OCC is applied is/are carried by the NPUSCH to which the OCC is applied.

41. The first terminal of claim 40, wherein the first processing unit is configured to perform one of following:
in a case that a sixth OCC group in which the DMRS(s) collide(s) with a reserved symbol exists in the one or more first OCC groups, not taking the sixth OCC group as one of the one or more fifth OCC groups; or
in a case that the sixth OCC group in which the DMRS(s) collide(s) with the reserved symbol exists in the one or more first OCC groups, taking, the sixth OCC group as one of the one or more fifth OCC groups.

42. The first terminal of claim 40 or 41, wherein each of the one or more fifth OCC groups comprises one or more OCC blocks, and different OCC blocks of the one or more OCC blocks correspond to different time domain ranges and/or different frequency domain ranges.

43. The first terminal of claim 42, wherein DMRS(s), to which the OCC is applied, that is sent in each of the one or more fifth OCC groups, is/are obtained by calculating based on a first orthogonal sequence and a DMRS sequence value corresponding to each OCC block in each fifth OCC group, and different OCC blocks in a same fifth OCC group correspond to a same DMRS sequence value.

44. The first terminal of claim 42 or 43, wherein DMRSs, to which the OCC is applied, that are sent by different OCC blocks in a same fifth OCC group in the one or more fifth OCC groups, correspond to a same sequence group index.

45. The first terminal of any one of claims 38 or 43, wherein the first orthogonal sequence is determined from a plurality of candidate orthogonal sequences based on an index of the first orthogonal sequence corresponding to the first terminal.

46. A network device, comprising:
a second communication unit, configured to receive, in one or more first Orthogonal Cover Code (OCC) groups, a Narrow-band Physical Uplink Shared Channel (NPUSCH), to which OCC(s) is/are applied, that is sent by at least one terminal.

47. The network device of claim 46, wherein the one or more first OCC groups are determined based on one or more second OCC groups, wherein the one or more second OCC groups are determined based on transmission resources occupied by the NPUSCH and/or lengths of orthogonal sequences.

48. The network device of claim 47, wherein the network device further comprises:
a second processing unit, configured to, in a case that a first resource satisfying a first condition exists in a third OCC group of the one or more second OCC groups, adjust the third OCC group; or
wherein the second communication unit is configured to, in a case that the first resource satisfying the first condition exists in the third OCC group of the one or more second OCC groups, perform one of following: canceling reception of the NPUSCH in the third OCC group, postponing reception of the NPUSCH corresponding to the third OCC group.

49. The network device of claim 48, wherein the second processing unit is configured to postpone the third OCC group to a position of a second resource, and take a postponed third OCC group as one of the one or more first OCC groups, wherein the second resource is located after the first resource and the second resource does not satisfy the first condition.

50. The network device of claim 48 or 49, wherein the first condition comprises that the NPUSCH collides with at least one of following: a Narrow-band Physical Random Access Channel (NPRACH) resource, an inserted gap, a reserved uplink subframe, a downlink reception, a reserved symbol, or a Sounding Reference Signal (SRS).

51. The network device of claim 46 or 47, wherein the second communication unit is configured to perform one of following:
in a case that a fourth OCC group in which the NPUSCH collides with a reserved symbol exists in the one or more first OCC groups, receive, in the fourth OCC group that is punctured based on the reserved symbol, the NPUSCH, to which the OCC(s) is/are applied, that is sent by the at least one terminal;
in a case that a fourth OCC group in which the NPUSCH collides with an SRS exists in the one or more first OCC groups, receive, in the fourth OCC group that is punctured based on the SRS, the NPUSCH, to which the OCC(s) is/are applied, that is sent by the at least one terminal;
in the case that the fourth OCC group in which the NPUSCH collides with the reserved symbol exists in the one or more first OCC groups, keep, at a position of the reserved symbol in the fourth OCC group, receiving the corresponding NPUSCH, to which the OCC(s) is/are applied, that is sent by the at least one terminal; or
in the case that the fourth OCC group in which the NPUSCH collides with the SRS exists in the one or more first OCC groups, keep, at a position of the SRS in the fourth OCC group, receiving the corresponding NPUSCH, to which the OCC(s) is/are applied, that is sent by the at least one terminal.

52. The network device of any one of claims 47 to 50, wherein the transmission resources occupied by the NPUSCH are related to a number of repetitions of the NPUSCH, and the number of the repetitions of the NPUSCH is determined based on at least one of following: a number of repetitions of the NPUSCH configured by a network device, a maximum Transport Block Size (TBS) configured by a higher layer when early data transmission (EDT) is performed, a TBS corresponding to NPUSCH transmission, or the length of the orthogonal sequence.

53. The network device of any one of claims 46 to 52, wherein the second processing unit is configured to obtain a NPUSCH of each first OCC group corresponding to each terminal of the at least one terminal based on orthogonal sequence(s) corresponding to the at least one terminal and the NPUSCH, to which the OCC(s) is/are applied, that is sent by the at least one terminal, that is received in each of the one or more first OCC groups.

54. The network device of claim 53, wherein the second processing unit is configured to descramble, based on a scrambling sequence of a NPUSCH of each first OCC group corresponding to each terminal, the NPUSCH of each first OCC group corresponding to each terminal, wherein the scrambling sequence of the NPUSCH of each first OCC group corresponding to each terminal is obtained by initializing based on a first frame index and/or a first slot index of each first OCC group.

55. The network device of any one of claims 46 to 54, wherein the second communication unit is configured to receive, in one or more fifth OCC groups, Demodulation Reference Signal(s) (DMRS(s)), to which the OCC(s) is/are applied, that is/are sent by the at least one terminal, wherein the one or more fifth OCC groups are at least part of the one or more first OCC groups, and the DMRS(s) to which the OCC(s) is/are applied is/are carried by the NPUSCH to which the OCC(s) is/are applied.

56. The network device of claim 55, wherein the second processing unit is configured to perform one of following:
in a case that a sixth OCC group in which the DMRS(s) collide(s) with a reserved symbol exists in the one or more first OCC groups, not receiving, the DMRS(s) in the sixth OCC group and not taking the sixth OCC group as one of the one or more fifth OCC groups; or
in a case that the sixth OCC group in which the DMRS(s) collide(s) with the reserved symbol exists in the one or more first OCC groups, taking the sixth OCC group as one of the one or more fifth OCC groups.

57. The network device of claim 55 or 56, wherein each of the one or more fifth OCC groups comprises one or more OCC blocks, and different OCC blocks of the one or more OCC blocks correspond to different time domain ranges and/or different frequency domain ranges.

58. The network device of claim 57, wherein the second processing unit is configured to demodulate, based on orthogonal sequence(s) corresponding to the at least one terminal and a DMRS sequence value corresponding to each OCC block in each fifth OCC group in the one or more fifth OCC groups, DMRS(s), that is/are sent by each terminal, that is/are received in each fifth OCC group, wherein the same terminal corresponds to the same DMRS sequence value for different OCC blocks in the same fifth OCC group.

59. The network device of claim 57 or 58, wherein sequence group indexes of DMRSs corresponding to different OCC blocks in a same fifth OCC group of a same terminal are the same.

60. The network device of claim 53 or 58, wherein orthogonal sequence(s) corresponding to the at least one terminal is/are determined from a plurality of candidate orthogonal sequences based on an index of the orthogonal sequence corresponding to each of the at least one terminal.

61. A first terminal comprising: a transceiver, a processor, and a memory, wherein the memory is configured to store a computer program, the transceiver is configured to communicate with other devices, and the processor is configured to invoke and execute the computer program stored in the memory to cause the first terminal to perform the method of any one of claims 1 to 15.

62. A network device comprising: a transceiver, a processor, and a memory, wherein the memory is configured to store a computer program, the transceiver is configured to communicate with other devices, and the processor is configured to invoke and execute the computer program stored in the memory to cause the first terminal to perform the method of any one of claims 16 to 30.

63. A chip comprising: a processor configured to invoke and execute a computer program from a memory to cause a device on which the chip is mounted to perform the method of any one of claims 1 to 15, or claims 16 to 30.

64. A computer-readable storage medium for storing a computer program that, when executed by a device, causes the device to perform the method of any one of claims 1 to 15, or claims 16 to 30.

65. A computer program product comprising computer program instructions that cause a computer to perform the method of any one of claims 1 to 15, or claims 16 to 30.

66. A computer program causing a computer to perform the method of any one of claims 1 to 15, or 16 to 30.
